# EUROPEAN PATENT APPLICATION

(11) **EP 2 942 433 A1**
(43) Date of publication of application: **11.11.2015**
(21) Application number: 15168749.8
(22) Date of filing: 11.02.2009
(51) Int. Cl.: D21C 5/02, C12P 7/06, C12P 7/16, C06B 31/00, C10L 1/00, C10L 5/00, C08L 1/02

(54) **METHODS AND SYSTEMS FOR FEEDSTOCK PRODUCTION FROM SEWAGE AND PRODUCT MANUFACTURING THEREFROM**

(30) Priority: 21.05.2008 US 71842 P; 13.08.2008 US 88350 P; 13.08.2008 WO PCT/US2008/009679
(62) Divisional of application: 09751015.0
(71) Applicant: Applied Cleantech Inc., Newton, MA 02461 (US)
(72) Inventor: Aharon, Refael, 98531 Maalle Adumim (IL); Biran, Israel, 42910 Avihail (IL); Banker, Ronny, 52244 Ramat-gan (IL)
(74) Representative: Vossius & Partner Patentanwälte Rechtsanwälte mbB

(57) **Abstract**

An ethanol containing composition comprising an oil content of 1-10% of said composition; a cellulose content of 50-90% of said composition; a hemicellulose content of 2-20% of said composition; a lignin content of less than 12% of said composition; a nitrogen containing organic compound content of less than 15% of said composition; a protein containing organic compound content of less than 15% of said composition; a mineral content of less than 5% of said composition; a sand content of less than 5% of said composition; and a dirt content of less than 5% of said composition.

## Description

### CROSS-REFERENCE TO RELATED APPLICATIONS

This application claims the benefit of, and priority to, U.S. Provisional Application Serial No. 61/088,350, filed on August 13, 2008. This application is also a continuation-in-part of PCT Application Serial No. PCT/US2008/009679, filed on August 13, 2008, which claims the benefit of, and priority to, U.S. Provisional Application Serial No. 61/071,842, filed on May 21, 2008. These applications are incorporated herein by reference in their entireties.

### FIELD OF THE INVENTION

The present invention relates generally to methods and systems for producing feedstock from sewage and more specifically relates to methods and systems for producing cellulosic feedstock from sewage and manufacturing of products therefrom.

### BACKGROUND OF THE INVENTION

Cellulose is an organic compound defined as a polysaccharide structured of a linear chain of several hundred to over ten thousand glucose units.

Fibers comprising cellulose can be found in sewage systems, such as municipal sewage waste systems, industrial waste systems and agricultural waste systems, for example.

The source of cellulose fibers in the municipal sewage waste system is typically from fruits and vegetables, paper, cloths and laundry refuse. For example, a cellulose fiber portion of raw sewage, i.e. untreated sewage, comprises generally 30 - 50% textile fibers, 10 - 35% vegetative fibers and 20 - 40% paper fibers.

### SUMMARY OF THE INVENTION

There is thus provided in accordance with an embodiment of the present invention a cellulosic feedstock composition including an oil content of up to 15% of the composition, a cellulose content of 40-99% of the composition, a hemicellulose content of 2-20% of the composition, a lignin content of less than 15% of the composition, a nitrogen containing organic compound content of less than 20% of the composition, a protein containing organic compound content of less than 20% of the composition, a mineral content of less than 5% of the composition, a sand content of less than 5% of the composition, and a dirt content of less than 25% of the composition.

In accordance with an embodiment of the present invention a caloric value of the composition is in the range of 5000-16000 BTU/Pounds. Additionally, the composition is produced from a solid portion of a sewage suspension.

In accordance with another embodiment of the present invention the composition is produced from the solid portion of the sewage suspension by trapping the solid portion from the sewage suspension, removing sand from the solid portion, removing a mineral from the solid portion, and removing dirt from the solid portion, thereby producing the composition. Additionally, the composition is produced by any one of the following: dewatering the solid portion, and sterilizing the solid portion.

In accordance with yet another embodiment of the present invention trapping the solid portion is performed by a device selected from the group consisting of: a netting, a plurality of nettings, a device employing Dissolved Air Floation technology, a conveyor belt formed of conveyor belt mesh, a centrifuge, a flow centrifuge, a hydrocyclonic centrifuge, a screw press, a vibration separator, a disk filter, a filter press, a media filter, a filter containing fibers, a biological filter, a filter containing cellulose, a chemical filter, a filter containing silica and a filter employing backflushing technology or a combination thereof. Additionally, removing sand is performed by centrifugation, hydrocyclonic centrifugation, vibration sedimentation, ultrasonic sedimentation or Dissolved Air Floation technology. Accordingly, removing sand is performed prior to trapping the solid portion or following trapping the solid portion.

In accordance with still another embodiment of the present invention removing a mineral is performed by washing the solid portion with a deionized water wash, a chemical wash or a hydrochloric acid wash or by use of steam or a combination thereof. Additionally, the composition is used to produce textile, a combustion product, a wood pellet, a wood chip, a fiberboard, plant media, pulp, paper, animal feed, animal media, a biofuel, butanol, propane butane or ethanol.

There is thus provided in accordance with another embodiment of the present invention a method for producing a cellulosic feedstock composition from a solid portion of a sewage suspension including trapping the solid portion from the sewage suspension, removing sand from the solid portion, removing a mineral from the solid portion, and removing dirt from the solid portion, thereby producing the cellulosic feedstock composition. Accordingly, removing sand is performed prior to trapping the solid portion or following trapping the solid portion. Preferably, removing sand is operative to decrease a sand content of the composition to less than 5% of the composition. Additionally, removing a mineral is operative to decrease a mineral content of the composition to less than 5% of the composition. Preferably, removing dirt is operative to decrease a dirt content of the composition to less than 25% of the composition.

In accordance with an embodiment of the present invention trapping the solid portion is performed by a device selected from the group consisting of: a netting, a plurality of nettings, a device employing Dissolved Air Floation technology, a conveyor belt formed of conveyor belt mesh, a centrifuge, a flow centrifuge, a hydrocyclonic centrifuge, a screw press, a vibration separator, a disk filter, a filter press, a media filter, a filter containing fibers, a biological filter, a filter containing cellulose, a chemical filter, a filter containing silica and a filter employing backflushing technology or a combination thereof. Preferably, removing sand is performed by centrifugation, hydrocyclonic centrifugation, vibration sedimentation, ultrasonic sedimentation or Dissolved Air Floation technology. Accordingly, removing a mineral is performed by washing the solid portion with a deionized water wash, a chemical wash or a hydrochloric acid wash or by use of steam or a combination thereof. Additionally, the method further includes at least one of the following dewatering the solid portion, and sterilizing the solid portion.

In accordance with another embodiment of the present invention the composition includes an oil content of up to 15% of the composition, a cellulose content of 40-99% of the composition, a hemicellulose content of 2-20% of the composition, a lignin content of less than 15% of the composition, a nitrogen containing organic compound content of less than 20% of the composition, a protein containing organic compound content of less than 20% of the composition, a mineral content of less than 5% of the composition, a sand content of less than 5% of the composition, and a dirt content of less than 25% of the composition.

There is thus provided in accordance with yet another embodiment of the present invention a combustion product composition including an oil content of 1-15% of the composition, a cellulose content of 40-90% of the composition, a hemicellulose content of 2-20% of the composition, a lignin content of less than 12% of the composition, a nitrogen containing organic compound content of less than 15% of the composition, a protein containing organic compound content of less than 15% of the composition, a mineral content of less than 5% of the composition, a sand content of less than 5% of the composition, and a dirt content of less than 5% of the composition. Additionally, a caloric value of the composition is in the range of 5000-16000 BTU/Pounds.

There is thus provided in accordance with still another embodiment of the present invention a method for producing a combustion product composition from a solid portion of a sewage suspension including trapping the solid portion from the sewage suspension, removing sand from the solid portion, removing a mineral from the solid portion, and removing dirt from the solid portion, thereby producing the combustion product composition. Additionally, the method further includes at least one of the following: grinding the solid portion, removing a protein containing organic compound from the solid portion, removing a nitrogen containing organic compound from the solid portion, pressing the solid portion, at least partially drying the solid portion, and adding oil to the solid portion. Preferably, removing the protein or nitrogen containing organic compound from the solid portion is performed by pH Gradient Electrophoresis employing an acid wash, a hydrogen chloride wash, a dihydrogen phosphate wash or a sodium hydroxide wash or a combination thereof.

There is thus provided in accordance with an embodiment of the present invention an ethanol containing composition including an oil content of 1-10% of the composition, a cellulose content of 50-90% of the composition, a hemicellulose content of 2-20% of the composition, a lignin content of less than 12% of the composition, a nitrogen containing organic compound content of less than 15% of the composition, a protein containing organic compound content of less than 15% of the composition, a mineral content of less than 5% of the composition, a sand content of less than 5% of the composition, and a dirt content of less than 5% of the composition. Additionally, a caloric value of the composition is in the range of 5000-16000 BTU/Pounds.

There is thus provided in accordance with another embodiment of the present invention a method for producing an ethanol containing composition from a solid portion of a sewage suspension including trapping the solid portion from the sewage suspension, removing sand from the solid portion, removing a mineral from the solid portion, and removing dirt from the solid portion, thereby producing the ethanol containing composition. Additionally, the method further includes at least one of the following: removing oil from the solid portion, removing a protein containing organic compound from the solid portion, removing a nitrogen containing organic compound from the solid portion, hydrolyzing the solid portion, grinding the solid portion, at least partially sterilizing the solid portion, and at least partially drying the solid portion. Preferably, removing the protein or nitrogen containing organic compound from the solid portion is performed by pH Gradient Electrophoresis employing an acid wash, a hydrogen chloride wash, a dihydrogen phosphate wash or a sodium hydroxide wash or a combination thereof.

There is thus provided in accordance with yet another embodiment of the present invention a pulp or paper product composition including an oil content of 1-10% of the composition, a cellulose content of 50-90% of the composition, a hemicellulose content of 2-20% of the composition, a lignin content of less than 4% of the composition, a nitrogen containing organic compound content of less than 15% of the composition, a protein containing organic compound content of less than 15% of the composition, a mineral content of less than 5% of the composition, a sand content of less than 5% of the composition, and a dirt content of less than 5% of the composition. Additionally, a particle size of the composition is in the range of 0.01 microns-100 mm.

There is thus provided in accordance with still another embodiment of the present invention a method for producing a pulp or paper product composition from a solid portion of a sewage suspension including trapping the solid portion from the sewage suspension, removing sand from the solid portion, removing a mineral from the solid portion, and removing dirt from the solid portion, thereby producing the pulp or paper product composition. Additionally, the method further includes at least one of the following: removing oil from the solid portion, removing a protein containing organic compound from the solid portion, removing a nitrogen containing organic compound from the solid portion, cleaning the solid portion, delignifying the solid portion, screening the solid portion, refining the solid portion, and at least partially drying the solid portion.

Preferably, removing the protein or nitrogen containing organic compound from the solid portion is performed by pH Gradient Electrophoresis employing an acid wash, a hydrogen chloride wash, a dihydrogen phosphate wash or a sodium hydroxide wash.

There is thus provided in accordance with an embodiment of the present invention an animal feed or animal media composition including an oil content of 1-10% of the composition, a cellulose content of 50-90% of the composition, a hemicellulose content of 2-20% of the composition, a lignin content of less than 12% of the composition, a nitrogen containing organic compound content of less than 15% of the composition, a protein containing organic compound content of less than 15% of the composition, a mineral content of less than 5% of the composition, a sand content of less than 5% of the composition, and a dirt content of less than 5% of the composition. Additionally, a caloric value of the composition is in the range of 5000-16000 BTU/Pounds.

There is thus provided in accordance with an embodiment of the present invention a method for producing an animal feed or animal media composition from a solid portion of a sewage suspension including trapping the solid portion from the sewage suspension, removing sand from the solid portion, removing a mineral from the solid portion, and removing dirt from the solid portion, thereby producing the animal feed or animal media composition.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. All publications, patent applications, patents, and other references mentioned herein are incorporated by reference in their entirety. In the case of conflict, the present specification, including definitions, will control. In addition, the materials, methods, and examples are illustrative only and not intended to be limiting.

Other features and advantages of the invention will be apparent from the following detailed description.

### BRIEF DESCRIPTION OF THE DRAWINGS

Fig. 1 is a simplified block diagram of a system for producing cellulosic feedstock from sewage, constructed and operative in accordance with an embodiment of the present invention;
Fig. 2 is a graph of a solid composition obtained from raw sewage Vs. a cellulosic feedstock composition processed in the system of Fig. 1;
Fig. 3 is a graph of an additional solid composition obtained from raw sewage Vs. a cellulosic feedstock composition processed in the system of Fig.1;
Fig. 4 is a simplified block diagram of a system for manufacturing a cellulosic product from cellulosic feedstock, constructed and operative in accordance with an embodiment of the present invention;
Fig. 5 is a graph of a solid composition obtained from raw sewage Vs. a cellulosic product composition processed in the systems of Fig. 1 and Fig. 4;
Fig. 6 is a graph of an additional solid composition obtained from raw sewage Vs. a cellulosic product composition processed in the systems of Fig. 1 and Fig. 4;
Fig. 7 is a simplified block diagram of a system for manufacturing a cellulosic product from cellulosic feedstock, constructed and operative in accordance with another embodiment of the present invention;
Fig. 8 is a graph of a solid composition obtained from raw sewage Vs. a cellulosic product composition processed in the systems of Fig. 1 and Fig. 7;
Fig. 9 is a graph of an additional solid composition obtained from raw sewage Vs. a cellulosic product composition processed in the systems of Fig. 1 and Fig. 7;
Fig. 10 is a simplified block diagram of a system for manufacturing a cellulosic product from cellulosic feedstock, constructed and operative in accordance with yet another embodiment of the present invention;
Fig. 11 is a graph of a solid composition obtained from raw sewage Vs. a cellulosic product composition processed in the systems of Fig. 1 and Fig. 10;
Fig. 12 is a graph of an additional solid composition obtained from raw sewage Vs. a cellulosic product composition processed in the systems of Fig. 1 and Fig. 10;
Fig. 13 is a simplified block diagram of a system for manufacturing a cellulosic product from cellulosic feedstock, constructed and operative in accordance with still another embodiment of the present invention;
Fig. 14 is a graph of a solid composition obtained from raw sewage Vs. a resulting cellulosic product composition processed in the systems of Fig. 1 and Fig. 13; and
Fig. 15 is a graph of an additional solid composition obtained from raw sewage Vs. a resulting cellulosic product composition processed in the systems of Fig. 1 and Fig. 13.

### DETAILED DESCRIPTION THE INVENTION

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well known features may be omitted or simplified in order not to obscure the present invention.

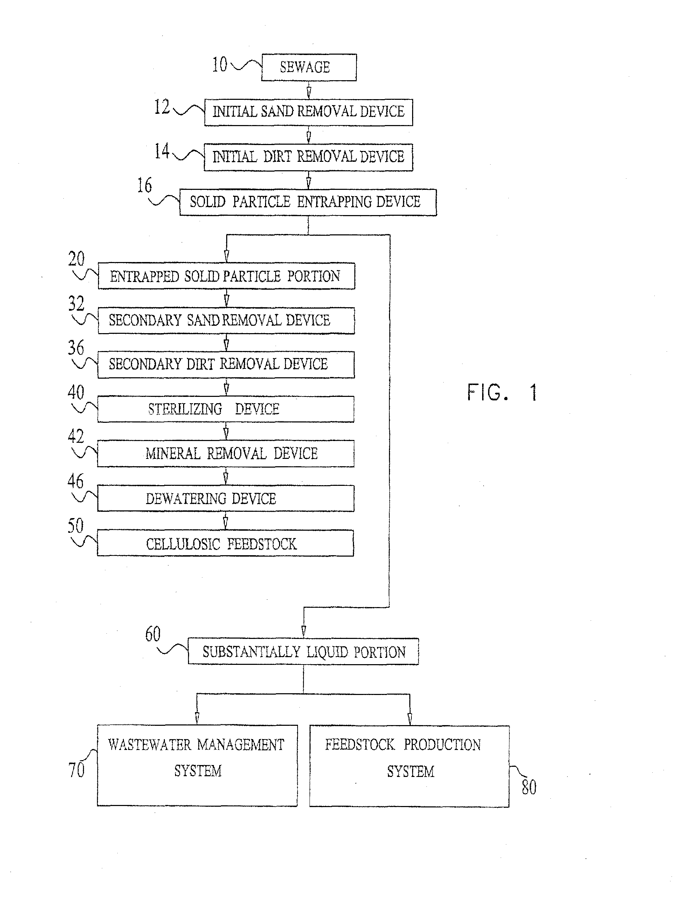

Reference is now made to Fig. 1, which is a simplified block diagram of a system for producing cellulosic feedstock from sewage, constructed and operative in accordance with an embodiment of the present invention. As seen in Fig. 1, sewage 10 may be introduced into an initial sand removal device 12.

Sewage 10 may be raw sewage, i.e. sewage flowing within a sewerage waste system prior to standard wastewater treatment thereof. Raw sewage may flow from a municipal sewage waste system or any other sewage system, such as, for example, industrial or agricultural waste systems.

Raw sewage of the municipal sewage waste system is a suspension comprising approximately 25 - 99.9% liquids and approximately 0.1 - 75% solids. Typically, the liquid portion comprises water and oils. The solid portion includes: non-organic matter, such as sand, minerals including, inter alia, salts and ash; dirt composed of organic and inorganic components such as iron, dust, rocks, metals and plastic particles; organic matter including, inter alia, nitrogen and protein containing organic compounds; organic fibers comprising, inter alia, cellulose fibers, hemicellulose fibers and lignin; and other sewage refuse.

Typically, the solid portion of raw sewage is an aggregate of particles containing generally a cellulose content of 20-90% thereof; a hemicellulose content of 1-35% thereof; a lignin content of less than 20% thereof; a nitrogen containing organic compound content of up to 20% thereof; a protein containing organic compound content of up to 20% thereof; a mineral content of less than 15% thereof; a sand content of less than 15% thereof and a dirt content of less than 30% thereof. Generally, the solid portion also includes oil and water adsorbed to the particles. Typically, the solid portion of raw sewage includes less than 15% of oil therein.

It is noted that the term "oil" includes any oleaginous matter such as grease, fats and oils.

Alternatively, sewage 10 may also be treated sewage, typically treated by standard wastewater treatment thereof and may be effused into sand removal device 12 from a municipal sewage waste system, a Wastewater Treatment Plant (WWTP) or any location within the WWTP prior to digestion of the sewage therein.

Sewage 10 may flow into sand removal device 12 via a pipe or by any other suitable means.

Initial sand removal device 12 is operative to remove sand from sewage 10 by any suitable means. For example, sand may be removed from sewage 10 by sedimentation of the sand and thereafter discarding the sand sediment from the sand removal device 12. Sedimentation of the sand may be performed by centrifugation, such as hydrocyclonic centrifugation, vibration or ultrasonic sedimentation, for example. Sand sediment may be discarded by any suitable means, such as via a pipe affixed to the sand removal device 12. Additionally, sand may be removed by employing Dissolved Air Floation (DAF) technology.

DAF technology is a process for removal of suspended matter, such as solids or oil, from a suspension. The removal is achieved by dissolving air in the suspension under pressure and then releasing the air at atmospheric pressure in a flotation tank or basin. The released air forms tiny bubbles which adhere to the suspended matter causing the suspended matter to float to the surface of the suspension. The floating suspended matter is thereafter removed from the surface. Thus suspended sand may be removed from the sewage suspension.

Initial sand removal in sand removal device 12 may be performed as the sewage 10 is flowing. Alternatively, sand may be initially removed from sewage 10 as the sewage flow is slowed or halted and sewage 10 is thereafter introduced into a tank wherein the initial sand removal is performed.

It is appreciated that the quantity of sand within sewage 10 may vary in accordance with the climate wherein the sewage 10 is located.

It is noted that sand removal device 12 may be obviated.

The sewage 10 maybe thereafter introduced into an initial dirt removal device 14 operative to remove dirt composed of components such as iron, dust, rocks, metals and plastic particles, by any suitable means. For example, dirt may be removed by sedimentation of the dirt and thereafter discarding the dirt sediment from the dirt removal device 14. Sedimentation of the dirt may be performed by centrifugation, such as hydrocyclonic centrifugation, vibration or ultrasonic sedimentation, for example. Dirt sediment may be discarded by any suitable means, such as via a pipe affixed to the dirt removal device 14. Additionally, dirt may be removed by employing DAF technology.

Iron may be removed by any suitable means, such as by utilizing a magnet which attracts the iron thereto thus removing a portion of the iron from the sewage 10.

Moreover, relatively light dirt components, such as dust, may be removed by sedimentation as described hereinabove, or by suspending the dirt components and thereafter discarding the dirt suspension from the dirt removal device 14. Relatively heavy dirt components, such as metals, may be removed by sedimentation as described hereinabove.

It is appreciated that initial dirt removal device 14 may be obviated.

Sewage 10 is introduced into a solid particle entrapping device 16. Entrapping device 16 may be comprised of a single net or a multiplicity of nettings for entrapping the solid portion of sewage 10. The multiplicity of nettings may be a series of nettings wherein each subsequent netting is formed with apertures of a smaller size than the previous netting so as to provide additional trapping of solid particles from the sewage 10. A netting mesh may be substantially in the range of 80 - 500 microns, for example.

The nettings may be formed in any suitable configuration and may be formed of any suitable material such as a corrosive resistive material and/or a high pressure resistive material, typically aluminum, for example.

It is appreciated that retrieval and entrapping of solid particles from sewage 10 may be achieved in any suitable manner, such as by employing DAF technology, by separation with conveyor belts formed of conveyor belt mesh; centrifugation, such as flow centrifugation or hydrocyclonic centrifugation, for example; separation by screw presses; separation by use of vibration in a vibration separator, filtering by disk filters, filter presses, media filters, such as filters containing fibers, for example, biological filters, such as filters containing cellulose, for example, chemical filters, such as filters containing silica, for example, a filter employing backflushing technology, or any other suitable manner for entrapping solids from sewage 10. A backflushing filter may be commercially available from the Salsnes Filter AS company of 279 Postboks, Namsos 7801, Norway, under the catalogue number of SF 6000.

A backflushing filter comprises a screen or a filtration media operative to filter solids such that solids accumulate on a first surface of the screen or filtration media. Liquid, generally water, is urged to flow from an opposite surface of the screen or filtration media to the first surface thereof. This reverse flow of liquid through the screen or filtration media is used for removing solids accumulated on the screen or filtration media during the filtration process.

A pressure device, such as a pump or a water jet, may be engaged with entrapping device 16. The pressure device is operative to ensure sewage 10 flows unhindered through entrapping device 16, such as by declogging oils and plastic particles accumulated on the net of entrapping device 16. Furthermore, a resulting entrapped solid particle portion 20, trapped by entrapping device 16, may be cleaved by application of pressure by the pressure device thereon. The pressure applied by the pressure device is typically in the range of 10 - 200 Atm, for example.

A vibration element, such as springs, may be provided to enhance flow of sewage 10 within entrapping device 16.

The entrapped solid particle portion 20 of entrapping device 16 is comprised of solid particles and liquids adsorbed to the solid particles, such as oils and water. Generally the solid particles of entrapped solid particle portion 20 exceed a size of approximately 80 microns. Typically, entrapped solid particle portion 20 comprises 10% - 90% of the solids from sewage 10 and includes 20% - 95% organic fibers.

It is noted that the term "size" may include any applicable parameter, such as a particle length or a particle diameter, for example.

Entrapped solid particle portion 20 may be removed from entrapping device 16 in any suitable manner, such as via conveyer belts, conduits or spiral cams, for example.

In a non-limiting example, a yield of 1 ton of cellulose of the solid particle portion 20 is obtained from processing 3300 m³ of sewage 10 within entrapping device 16 and an amount of 15,000 m³ of cellulose of the solid particle portion 20 is obtained per day.

The entrapped solid portion 20 may be introduced into a secondary sand removal device 32 for further removal of sand within entrapped solid portion 20 by any suitable means. Secondary sand removal device 32 may be formed of any one of the abovementioned apparati forming initial sand removal device 12.

In a non-limiting example, initial sand removal device 12 and secondary sand removal device 32 are operative to remove the sand content such that approximately less than 5% sand content remains within entrapped solid portion 20.

It is appreciated that secondary sand removal device 32 may be obviated.

The entrapped solid portion 20 may be introduced into a secondary dirt removal device 36 for further removal of dirt within entrapped solid portion 20 by any suitable means. Secondary dirt removal device 36 may be formed of any one of the abovementioned apparati forming initial dirt removal device 14.

In a non-limiting example, initial dirt removal device 14 and secondary dirt removal device 36 are operative to remove the dirt content such that approximately less than 25% dirt content remains in entrapped solid portion 20.

It is appreciated that secondary dirt removal device 36 may be obviated.

The entrapped solid portion 20 may be introduced into a sterilizing device 40 for sterilizing entrapped solid portion 20. Sterilizing device 40 may employ any suitable method for sterilizing the solid portion 20, such as steam sterilization, UV sterilization and use of a chemical reagent for sterilization, for example. Alternatively, the entrapped solid portion 20 may be partially sterilized, such as by being introduced into a pasteurization device for pasteurizing the entrapped solid portion 20.

It is appreciated that the sterilizing device 40 may be obviated.

The entrapped solid portion 20 may be introduced into a mineral removal device 42 for removal of minerals, typically ash and salts, therefrom, by any suitable means. For example, minerals may be removed by washing the entrapped solid portion 20, such as by washing with a deionized water wash, a chemical wash, such as a hydrochloric acid wash and/or use of steam.

In a non-limiting example, mineral removal device 42 is operative to remove the mineral content such that approximately less than 5% mineral content remains in entrapped solid portion 20.

It is appreciated that mineral removal device 42 may be obviated.

The entrapped solid portion 20 may be introduced into a dewatering device 46 for removing a portion of water from solid portion 20. Dewatering device 46 may employ any suitable method for removing water from the solid portion 20, such as by evaporation employing heat treatment, such as use of solar heat or greenhouse heat, for example, cryogenic treatment, vacuum, a press, such as a screw press, a drum dryer or a combination thereof.

It is appreciated that dewatering device 46 may be obviated.

A resultant cellulosic feedstock composition 50 is thus produced from sewage 10.

It is appreciated that the order of using the devices described hereinabove may be alternated so as to produce cellulosic feedstock 50 from sewage 10.

A skilled artisan will appreciate that in the process of producing cellulosic feedstock 50 some of the devices described hereinabove may be obviated without compromising the quality of the produced cellulosic feedstock 50.

Cellulosic feedstock 50 may be used to manufacture a plurality of materials, such as, without limiting: textile; combustion products, such as wood pellets, wood chips; fiberboards; plant media; pulp; paper; animal feed; animal media and biofuels, such as butanol, propane butane and ethanol, for example.

The cellulosic feedstock 50 is a composition substantially comprising an oil content of up to 15% thereof; a cellulose content of 40-99% thereof; a hemicellulose content of 2-20% thereof; a lignin content of less than 15% thereof; a nitrogen containing organic compound content of up to 20% thereof; and a protein containing organic compound content of up to 20% thereof; a mineral content of less than 5% thereof; a sand content of less than 5% thereof and a dirt content of less than 25% thereof.

It is noted that the oil content may be an oil content of up to 1% thereof, an oil content of up to 2% thereof, an oil content of up to 3% thereof, an oil content of up to 4% thereof, an oil content of up to 5% thereof, an oil content of up to 6% thereof, an oil content of up to 7% thereof, an oil content of up to 8% thereof, an oil content of up to 9% thereof, an oil content of up to 10% thereof, an oil content of up to 11% thereof, an oil content of up to 12% thereof, an oil content of up to 13% thereof, an oil content of up to 14% thereof or an oil content of up to 15% thereof.

The cellulose content may be a cellulose content of 40-45% thereof, a cellulose content of 50-55% thereof, a cellulose content of 55-60% thereof, a cellulose content of 60-65% thereof, a cellulose content of 65-70% thereof, a cellulose content of 70-75% thereof, a cellulose content of 75-80% thereof, a cellulose content of 80-85% thereof, a cellulose content of 85-90% thereof, a cellulose content of 90-95% thereof or a cellulose content of 95-99% thereof.

The hemicellulose content may be a hemicellulose content of 2% thereof, a hemicellulose content of 2-3% thereof, a hemicellulose content of 2-4% thereof, a hemicellulose content of 2-5% thereof; a hemicellulose content of 2-6% thereof, a hemicellulose content of 2-7% thereof, a hemicellulose content of 2-8% thereof, a hemicellulose content of 2-9% thereof, a hemicellulose content of 2-10% thereof, a hemicellulose content of 2-11% thereof, a hemicellulose content of 2-12% thereof, a hemicellulose content of 2-13% thereof, a hemicellulose content of 2-14% thereof, a hemicellulose content of 2-15% thereof, a hemicellulose content of 2-16% thereof, a hemicellulose content of 2-17% thereof, a hemicellulose content of 2-18% thereof, a hemicellulose content of 2-19% thereof or a hemicellulose content of 20% thereof.

The lignin content may be a lignin content of less than 15% thereof, a lignin content of less than 14% thereof, a lignin content of less than 13% thereof, a lignin content of less than 12% thereof, a lignin content of less than 11% thereof, a lignin content of less than 10% thereof, a lignin content of less than 9% thereof, a lignin content of less than 8% thereof, a lignin content of less than 7% thereof, a lignin content of less than 6% thereof, a lignin content of less than 5% thereof, a lignin content of less than 4% thereof, a lignin content of less than 3% thereof, a lignin content of less than 2% thereof or a lignin content of less than 1% thereof.

The nitrogen containing organic compound content may be a content of up to 1% thereof, a nitrogen containing organic compound content of up to 2% thereof, a nitrogen containing organic compound content of up to 3% thereof, a nitrogen containing organic compound content of up to 4% thereof, a nitrogen containing organic compound content of up to 5% thereof, a nitrogen containing organic compound content of up to 6% thereof, a nitrogen containing organic compound content of up to 7% thereof, a nitrogen containing organic compound content of up to 8% thereof, a nitrogen containing organic compound content of up to 9% thereof, a nitrogen containing organic compound content of up to 10% thereof, a nitrogen containing organic compound content of up to 11 % thereof, a nitrogen containing organic compound content of up to 12% thereof, a nitrogen containing organic compound content of up to 13% thereof, a nitrogen containing organic compound content of up to 14% thereof, a nitrogen containing organic compound content of up to 15% thereof, a nitrogen containing organic compound content of up to 16% thereof, a nitrogen containing organic compound content of up to 17% thereof, a nitrogen containing organic compound content of up to 18% thereof, a nitrogen containing organic compound content of up to 19% thereof or a nitrogen containing organic compound content of up to 20% thereof.

The protein containing organic compound content may be a content of up to 1 % thereof, a protein containing organic compound content of up to 2% thereof, a protein containing organic compound content of up to 3% thereof, a protein containing organic compound content of up to 4% thereof, a protein containing organic compound content of up to 5% thereof, a protein containing organic compound content of up to 6% thereof, a protein containing organic compound content of up to 7% thereof, a protein containing organic compound content of up to 8% thereof, a protein containing organic compound content of up to 9% thereof, a protein containing organic compound content of up to 10% thereof, a protein containing organic compound content of up to 11% thereof, a protein containing organic compound content of up to 12% thereof, a protein containing organic compound content of up to 13% thereof, a protein containing organic compound content of up to 14% thereof, a protein containing organic compound content of up to 15% thereof, a protein containing organic compound content of up to 16% thereof, a protein containing organic compound content of up to 17% thereof, a protein containing organic compound content of up to 18% thereof, a protein containing organic compound content of up to 19% thereof or a protein containing organic compound content of up to 20% thereof.

The sand content may be less than 5% thereof, less than 4% thereof, less than 3% thereof, less than 2% thereof, less than 1% thereof or less than 0.5% thereof. The mineral content maybe less than 5% thereof, less than 4% thereof, less than 3% thereof, less than 2% thereof, less than 1% thereof or less than 0.5% thereof. The dirt content maybe less than 25% thereof, less than 20% thereof, less than 15% thereof, less than 10% thereof, less than 5% thereof or less than 1% thereof.

The cellulosic feedstock 50 may comprise particles with a size of 0.01 microns-100 mm, a size of 0.01-1 microns, a size of 1-5 microns, a size of 5-10 microns, a size of 10-20 microns, a size of 20-30 microns, a size of 30-40 microns, a size of 40-50 microns, a size of 50-60 microns, a size of 60-70 microns, a size of 70-80 microns, a size of 80-90 microns, a size of 90-100 microns, a size of 100-150 microns, a size of 150-200 microns, a size of 200-250 microns, a size of 250-300 microns, a size of 300-350 microns, a size of 350-400 microns, a size of 400-450 microns, a size of 450-500 microns, a size of 500-550 microns, a size of 550-600 microns, a size of 600-650 microns, a size of 650-700 microns, a size of 750-800 microns, a size of 800-850 microns, a size of 850-900 microns, a size of 900-950 microns, a size of 950-1000 microns, a size of 1-5 mm, a size of 5-10 mm, a size of 10-15 mm, a size of 15-20 mm, a size of 20-25 mm, a size of 25-30 mm, a size of 30-35 mm, a size of 35-40 mm, a size of 40-45 mm, a size of 45-50 mm, a size of 50-55 mm, a size of 55-60 mm, a size of 60-65 mm, a size of 65-70 mm, a size of 70-75 mm, a size of 75-80 mm, a size of 80-85 mm, a size of 85-90 mm, a size of 90-95 mm or a size of 95-100 mm.

The caloric value of the cellulosic feedstock 50 may be in the range of 5000-16000 British Thermal Units (BTU)/Pound. It is noted that the caloric value of the cellulosic feedstock 50 may be in the range of 5000-6000 BTU/Pound; in the range of 6000-7000 BTU/Pound; in the range of 7000-8000 BTU/Pound; in the range of 8000-9000 BTU/Pound; in the range of 9000-10000 BTU/Pound; in the range of 10000-11000 BTU/Pound; in the range of 11000-12000 BTU/Pound; in the range of 12000-13000 BTU/Pound; in the range of 13000-14000 BTU/Pound; in the range of 14000-15000 BTU/Pound or in the range of 15000-16000 BTU/Pound.

A residual, substantially liquid portion 60, discharged from entrapping device 16, comprises the liquid portion of sewage 10 and relatively small solid particles, typically particles with a size of less than approximately 80 microns. Liquid portion 60 may be discarded or may flow to a wastewater management system 70, such as back to the municipal sewage waste system, a WWTP or any location prior to digestion within the WWTP, for example, in any suitable manner, such as by conduits. Alternatively, liquid portion 60 may be introduced into an additional feedstock production system 80 for producing additional feedstock from sewage 10.

It is appreciated that producing the cellulosic feedstock 50 according to the method described hereinabove provides for a plurality of superior benefits. For example, the entrapped solid particle portion 20 obtained from sewage has relatively less lignin in comparison with solids retrieved from vegetative sources, such as, wood, wheat and corn. In a non-limiting example, entrapped solid particle portion 20 retrieved from sewage 10 contains 30% - 60% less lignin than solids retrieved from corn. Thus use of entrapped solid particle portion 20 retrieved from sewage 10 allows for producing cellulosic feedstock 50 with a relatively small volume of lignin. This may be advantages in production of a paper product from the cellulosic feedstock since the quality of the paper product increases as the lignin volume decreases therein.

An additional benefit is that fibers of entrapped solid particle portion 20 have a larger total surface area than fibers retrieved from vegetative sources. This is due to disintegration of the fibers within the sewage 10 and due to cleaving of fibers by urging of the pressure device thereon. Thus use of fibers of entrapped solid particle portion 20 enhances the efficiency of feedstock production due to the relatively large fiber surface area, which allows for increased contact with processing materials, such as contact with a hydrochloric acid wash for manufacturing products from the cellulosic feedstock 50, for example.

Another benefit is that fibers of entrapped solid particle portion 20 obtained from sewage have a relatively high cellulose content, as described hereinabove, thus allowing for production of high quality products therefrom. For example, ethanol, which comprises mainly cellulose, may be produced from the cellulosic feedstock 50.

Conventionally, following treatment of sewage 10 in a wastewater management system, typically a WWTP, the volume of solids within the sewage 10 is reduced. For example the volume of solids within the sewage 10 is conventionally reduced by 30-40% due to processing within a digestion tank in the WWTP. Processing of sewage 10 produces sludge. Typically, sludge is disposed of by drying and landfilling thereafter.

It is a particular feature of the present invention that solids of the sewage 10 are removed from sewage 10 prior to entering the digestion tank within the WWTP. Removal of solids from sewage 10 may be performed prior to entering a primary sedimentation tank within the WWTP. This allows for maximal removal of solids from sewage 10 prior to settling of solids within the sedimentation tank.

Removal of solids from the sewage 10 decreases the volume of the solid components to be digested or processed within the WWTP. For example, introducing sewage 10 into entrapping device 16 may bring to volume reduction of the solids within sewage 10 by approximately 40%. Thus removing the solids from the sewage according to the method described hereinabove provides an additional benefit by decreasing the solid volume to be processed within the WWTP.

The examples as set forth herein are meant to exemplify the various aspects of carrying out the invention and are not intended to limit the invention in any way.

The invention is summarized by the following items:
1. A cellulosic feedstock composition comprising:
   an oil content of up to 15% of said composition;
   a cellulose content of 40-99% of said composition;
   a hemicellulose content of 2-20% of said composition;
   a lignin content of less than 15% of said composition;
   a nitrogen containing organic compound content of less than 20% of said composition;
   a protein containing organic compound content of less than 20% of said composition;
   a mineral content of less than 5% of said composition;
   a sand content of less than 5% of said composition; and
   a dirt content of less than 25% of said composition.
2. A composition according to item 1 wherein a caloric value of said composition is in the range of 5000-16000 BTU/Pounds.
3. A composition according to item 1 wherein said composition is produced from a solid portion of a sewage suspension.
4. A composition according to item 3 wherein said composition is produced from said solid portion of said sewage suspension by:
   trapping said solid portion from said sewage suspension;
   removing sand from said solid portion;
   removing a mineral from said solid portion; and
   removing dirt from said solid portion,
   thereby producing said composition.
5. A composition according to item 4 wherein said composition is produced by any one of the following:
   dewatering said solid portion; and
   sterilizing said solid portion.
6. A composition according to item 4 wherein said trapping said solid portion is performed by a device selected from the group consisting of: a netting, a plurality of nettings, a device employing Dissolved Air Floation technology; a conveyor belt formed of conveyor belt mesh, a centrifuge, a flow centrifuge, a hydrocyclonic centrifuge, a screw press, a vibration separator, a disk filter, a filter press, a media filter, a filter containing fibers, a biological filter, a filter containing cellulose, a chemical filter, a filter containing silica and a filter employing backflushing technology or a combination thereof.
7. A composition according to item 4 wherein said removing sand is performed by centrifugation, hydrocyclonic centrifugation, vibration sedimentation, ultrasonic sedimentation or Dissolved Air Floation technology or a combination thereof.
8. A composition according to item 4 wherein said removing sand is performed prior to said trapping said solid portion or following said trapping said solid portion.
9. A composition according to item 4 wherein said removing a mineral is performed by washing said solid portion with a deionized water wash, a chemical wash or a hydrochloric acid wash or by use of steam or a combination thereof.
10. A composition according to item 1 wherein said composition is used to produce textile, a combustion product, a wood pellet, a wood chip, a fiberboard, plant media, pulp, paper, animal feed, animal media, a biofuel, butanol, propane butane or ethanol.
11. A method for producing a cellulosic feedstock composition from a solid portion of a sewage suspension comprising:
   trapping said solid portion from said sewage suspension;
   removing sand from said solid portion;
   removing a mineral from said solid portion; and
   removing dirt from said solid portion,
   thereby producing said cellulosic feedstock composition.
12. A method according to item 11 wherein said removing sand is performed prior to said trapping said solid portion or following said trapping said solid portion.
13. A method according to item 11 wherein said removing sand is operative to decrease a sand content of said composition to less than 5% of said composition.
14. A method according to item 11 wherein said removing a mineral is operative to decrease a mineral content of said composition to less than 5% of said composition.
15. A method according to item 11 wherein said removing dirt is operative to decrease a dirt content of said composition to less than 25% of said composition.
16. A method according to item 11 wherein said trapping said solid portion is performed by a device selected from the group consisting of: a netting, a plurality of nettings, a device employing Dissolved Air Floation technology; a conveyor belt formed of conveyor belt mesh, a centrifuge, a flow centrifuge, a hydrocyclonic centrifuge, a screw press, a vibration separator, a disk filter, a filter press, a media filter, a filter containing fibers, a biological filter, a filter containing cellulose, a chemical filter, a filter containing silica and a filter employing backflushing technology or a combination thereof.
17. A method according to item 11 wherein said removing sand is performed by centrifugation, hydrocyclonic centrifugation, vibration sedimentation, ultrasonic sedimentation or Dissolved Air Floation technology or a combination thereof.
18. A method according to item 11 wherein said removing a mineral is performed by washing said solid portion with a deionized water wash, a chemical wash or a hydrochloric acid wash or by use of steam or a combination thereof.
19. A method according to item 11 further comprising at least one of the following:
   dewatering said solid portion; and
      sterilizing said solid portion.
20. A method according to item 11 and wherein said composition comprises:
   an oil content of up to 15% of said composition;
   a cellulose content of 40-99% of said composition;
   a hemicellulose content of 2-20% of said composition;
   a lignin content of less than 15% of said composition;
   a nitrogen containing organic compound content of less than 20% of said composition;
   a protein containing organic compound content of less than 20% of said composition;
   a mineral content of less than 5% of said composition;
   a sand content of less than 5% of said composition; and
   a dirt content of less than 25% of said composition.
21. A combustion product composition comprising:
   an oil content of 1-15% of said composition;
   a cellulose content of 40-90% of said composition;
   a hemicellulose content of 2-20% of said composition;
   a lignin content of less than 12% of said composition;
   a nitrogen containing organic compound content of less than 15% of said composition;
   a protein containing organic compound content of less than 15% of said composition;
   a mineral content of less than 5% of said composition;
   a sand content of less than 5% of said composition; and
   a dirt content of less than 5% of said composition.
22. A combustion product composition according to item 21 wherein a caloric value of said composition is in the range of 5000-16000 BTU/Pounds.
23. A method for producing a combustion product composition from a solid portion of a sewage suspension comprising:
   trapping said solid portion from said sewage suspension;
   removing sand from said solid portion;
   removing a mineral from said solid portion; and
   removing dirt from said solid portion,
   thereby producing said combustion product composition.
24. A method according to item 23 further comprising at least one of the following:
   grinding said solid portion;
   removing a protein containing organic compound from said solid portion;
   removing a nitrogen containing organic compound from said solid portion;
   pressing said solid portion;
   at least partially drying said solid portion; and
   adding oil to said solid portion.
25. A method according to item 24 wherein said removing said protein containing organic compound from said solid portion is performed by pH Gradient Electrophoresis employing an acid wash, a hydrogen chloride wash, a dihydrogen phosphate wash or a sodium hydroxide wash or a combination thereof.
26. A method according to item 24 wherein said removing said nitrogen containing organic compound from said solid portion is performed by pH Gradient Electrophoresis employing an acid wash, a hydrogen chloride wash, a dihydrogen phosphate wash or a sodium hydroxide wash or a combination thereof.
27. An ethanol containing composition comprising:
   an oil content of 1-10% of said composition;
   a cellulose content of 50-90% of said composition;
   a hemicellulose content of 2-20% of said composition;
   a lignin content of less than 12% of said composition;
   a nitrogen containing organic compound content of less than 15% of said composition;
   a protein containing organic compound content of less than 15% of said composition;
   a mineral content of less than 5% of said composition;
   a sand content of less than 5% of said composition; and
   a dirt content of less than 5% of said composition.
28. An ethanol containing composition according to item 27 wherein a caloric value of said composition is in the range of 5000-16000 BTU/Pounds.
29. A method for producing an ethanol containing composition from a solid portion of a sewage suspension comprising:
   trapping said solid portion from said sewage suspension;
   removing sand from said solid portion;
   removing a mineral from said solid portion; and
   removing dirt from said solid portion,
   thereby producing said ethanol containing composition.
30. A method according to item 29 further comprising at least one of the following:
   removing oil from said solid portion;
   removing a protein containing organic compound from said solid portion;
   removing a nitrogen containing organic compound from said solid portion;
   hydrolyzing said solid portion;
   grinding said solid portion;
   at least partially sterilizing said solid portion; and
   at least partially drying said solid portion.
31. A method according to item 30 wherein said removing said protein containing organic compound from said solid portion is performed by pH Gradient Electrophoresis employing an acid wash, a hydrogen chloride wash, a dihydrogen phosphate wash or a sodium hydroxide wash or a combination thereof.
32. A method according to item 30 wherein said removing said nitrogen containing organic compound from said solid portion is performed by pH Gradient Electrophoresis employing an acid wash, a hydrogen chloride wash, a dihydrogen phosphate wash or a sodium hydroxide wash or a combination thereof.
33. A pulp or paper product composition comprising:
   an oil content of 1-10% of said composition;
   a cellulose content of 50-90% of said composition;
   a hemicellulose content of 2-20% of said composition;
   a lignin content of less than 4% of said composition;
   a nitrogen containing organic compound content of less than 15% of said composition;
   a protein containing organic compound content of less than 15% of said composition;
   a mineral content of less than 5% of said composition;
   a sand content of less than 5% of said composition; and
   a dirt content of less than 5% of said composition.
34. A pulp or paper product composition according to item 33 wherein a particle size of said composition is in the range of 0.01 microns-100 mm.
35. A method for producing a pulp or paper product composition from a solid portion of a sewage suspension comprising:
   trapping said solid portion from said sewage suspension;
   removing sand from said solid portion;
   removing a mineral from said solid portion; and
   removing dirt from said solid portion,
   thereby producing said pulp or paper product composition.
36. A method according to item 35 further comprising at least one of the following:
   removing oil from said solid portion;
   removing a protein containing organic compound from said solid portion;
   removing a nitrogen containing organic compound from said solid portion;
   cleaning said solid portion;
   delignifying said solid portion;
   screening said solid portion;
   refining said solid portion; and
   at least partially drying said solid portion.
37. A method according to item 36 wherein said removing said protein containing organic compound from said solid portion is performed by pH Gradient Electrophoresis employing an acid wash, a hydrogen chloride wash, a dihydrogen phosphate wash or a sodium hydroxide wash or a combination thereof.
38. A method according to item 36 wherein said removing said nitrogen containing organic compound from said solid portion is performed by pH Gradient Electrophoresis employing an acid wash, a hydrogen chloride wash, a dihydrogen phosphate wash or a sodium hydroxide wash or a combination thereof.
39. An animal feed or animal media composition comprising:
   an oil content of 1-10% of said composition;
   a cellulose content of 50-90% of said composition;
   a hemicellulose content of 2-20% of said composition;
   a lignin content of less than 12% of said composition;
   a nitrogen containing organic compound content of less than 15% of said composition;
   a protein containing organic compound content of less than 15% of said composition;
   a mineral content of less than 5% of said composition;
   a sand content of less than 5% of said composition; and
   a dirt content of less than 5% of said composition.
40. An animal feed or animal media composition according to item 39 wherein a caloric value of said composition is in the range of 5000-16000 BTU/Pounds.
41. A method for producing an animal feed or animal media composition from a solid portion of a sewage suspension comprising:
   trapping said solid portion from said sewage suspension;
   removing sand from said solid portion;
   removing a mineral from said solid portion; and
   removing dirt from said solid portion,
   thereby producing said animal feed or animal media composition.
42. A method according to item 41 further comprising at least one of the following:
   pressing said solid portion;
   at least partially sterilizing said solid portion;
   at least partially drying said solid portion; and
   grinding said solid portion.

### EXAMPLE 1

### Experimental Procedure:

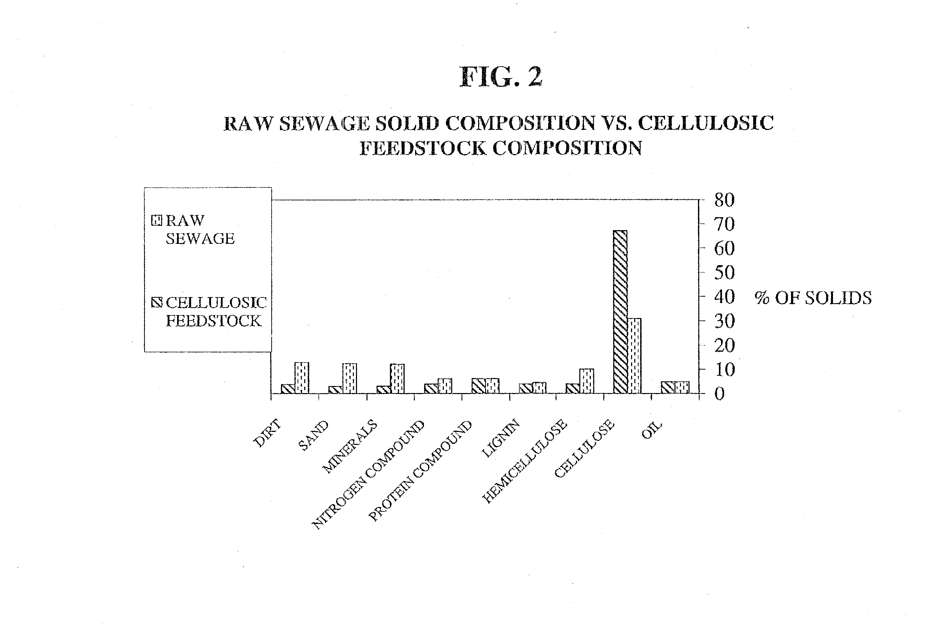

100 m³ of raw sewage, including a solid portion of approximately 0.1% of the raw sewage, was obtained from a municipal sewage waste system. As seen in Fig. 2, the composition of the raw sewage solid portion generally comprises 5% oil, 31 % cellulose, 10% hemicellulose, 4.5% lignin, 6% protein containing organic compound, 6% nitrogen containing organic compound, 12.1 % minerals, 12.5% sand and 12.9% dirt.

The raw sewage was introduced into a hydrocyclone centrifuge at a pressure of 3 Atm for initial sand and dirt removal from the raw sewage. The remaining portion was introduced into a magnet containing device wherein a portion of iron was magnetically removed.

Thereafter the raw sewage was introduced into an entrapping device formed of a net of a 250 micron mesh. Approximately 50Kg of solids were entrapped within the net. The residual liquid portion was discarded.

Secondary sand removal was performed by sedimentation in a conical-shaped pool wherein the sand sunk to the bottom of the pool. The sedimented sand was discarded.

The solid portion was introduced into a sterilizer at a temperature of 85°C for 10 minutes.

Mineral removal was performed by use of a chemical wash wherein the solid portion was boiled at 85°C for one hour with a solution of distilled water mixed with a 37% hydrochloric acid in a boiling apparatus. The boiled solid portion was thereafter washed 2 times with deionized water.

The solid portion was pressed in a screw press for partial removal of liquids therefrom.

### Experimental Results:

As seen in Figure 2, a resulting cellulosic feedstock composition was produced in the system described hereinabove wherein the cellulosic feedstock composition generally comprises 5% oil, 67.1% cellulose, 4% hemicellulose, 4% lignin, 6% protein containing organic compound, 4% nitrogen containing organic compound, 3.1 % minerals, 3% sand and 3.8% dirt.

### EXAMPLE 2

### Experimental Procedure:

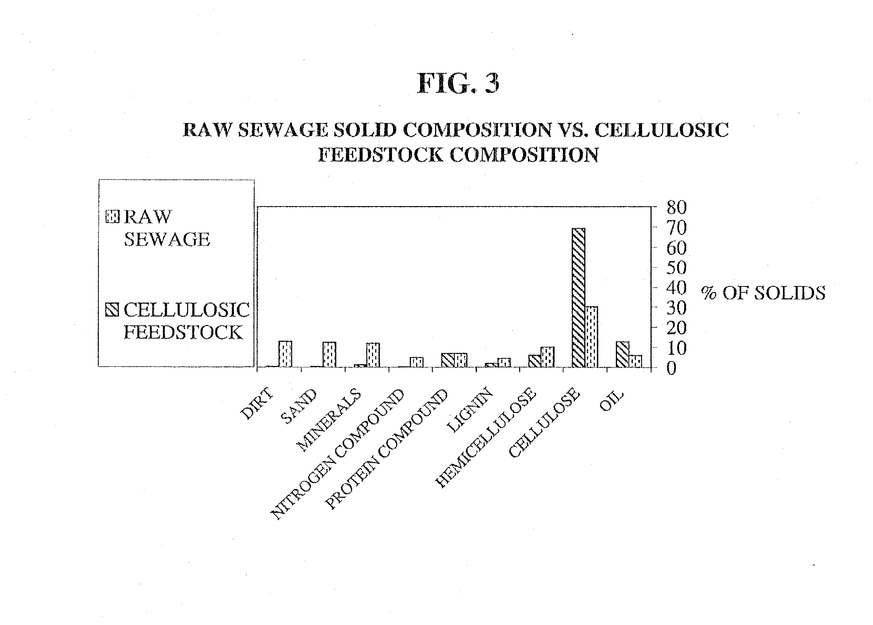

120 m³ of raw sewage, including a solid portion of approximately 0.05% of the raw sewage, was obtained from a municipal sewage waste system. As seen in Fig. 3, the composition of the raw sewage solid portion generally comprises 6% oil, 30% cellulose, 10% hemicellulose, 4.5% lignin, 7% protein containing organic compound, 5% nitrogen containing organic compound, 12.1 % minerals, 12.5% sand and 12.9% dirt.

The raw sewage was introduced into a hydrocyclone centrifuge at a pressure of 3 Atm for initial sand and dirt removal from the raw sewage.

Thereafter the raw sewage was introduced into a vibration separator commercially available from the Sewco company of 8029 US Highway 25
Florence, KY, USA under catalogue model SS of Sanitary Separators for entrapping solids therein by use of vibration. The residual liquid portion was discarded.

Secondary sand removal was performed by sedimentation in a conical-shaped pool wherein the sand sunk to the bottom of the pool. The sedimented sand was discarded.

The solid portion was pasteurized in a pasteurization device at a temperature of 72 °C for two minutes for partial sterilization thereof.

Mineral removal was performed by use of a chemical wash wherein the solid portion was washed with a solution of distilled water mixed with a 2% hydrochloric acid. The solid portion was thereafter washed with soft water.

The solid portion was pressed in a screw press for partial removal of liquids therefrom.

### Experimental Results:

As seen in Figure 3, a resulting cellulosic feedstock composition was produced in the system described hereinabove wherein the cellulosic feedstock composition generally comprises 13% oil, 69.4% cellulose, 6% hemicellulose, 2% lignin, 7% protein containing organic compound, 0.3% nitrogen containing organic compound, 1.3 % minerals, 0.5% sand and 0.5% dirt.

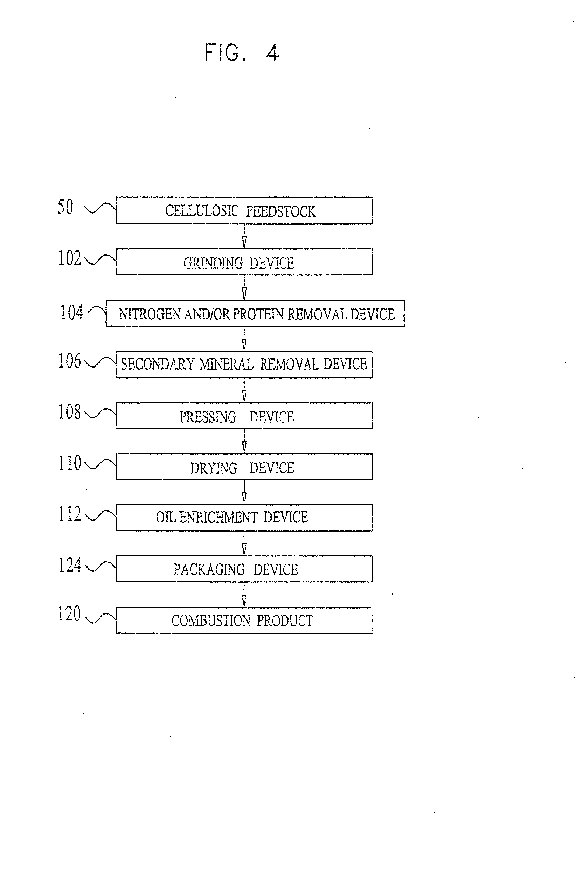

Reference is now made to Fig. 4, which is a simplified block diagram of a system for manufacturing a combustion product from cellulosic feedstock, constructed and operative in accordance with an embodiment of the present invention. As seen in Fig. 4, the cellulosic feedstock 50 may be ground in a grinding device 102 by any suitable means, such as by employment of a screw press, a filter or a blender, a ball grinder, a stone or knife grinder, for example. The cellulosic feedstock 50 maybe ground to any suitable particle size, such as to particles with a size of approximately less than 1 mm, for example.

It is appreciated that grinding device 102 may be obviated.

The cellulosic feedstock 50 may be introduced into a nitrogen and/or protein removal device 104 for removal of a portion of the nitrogen and protein containing compounds by any suitable means, such as by pH Gradient Electrophoresis employing acid washes, such as a hydrogen chloride (HCl) wash, a dihydrogen phosphate (H₂PO₄) wash or a sodium hydroxide (NaOH) wash, for example.

It is appreciated that nitrogen and/or protein removal device 104 may be obviated.

The cellulosic feedstock 50 may be introduced into a secondary mineral removal device 106 for further removal of minerals within cellulosic feedstock 50 by any suitable means. Secondary mineral removal device 106 maybe formed of any one of the abovementioned apparati forming mineral removal device 42 of Fig. 1.

It is appreciated that secondary mineral removal device 106 may be obviated.

The cellulosic feedstock 50 may be thereafter pressed in a pressing device 108 employing any suitable means, such use of a screw press or a filter press, a piston press, a belt press or a centrifuge for example. It is appreciated that pressing device 108 may be obviated.

The cellulosic feedstock 50 may be introduced into a drying device 110 for at least partially drying cellulosic feedstock 50. Drying device 110 may employ any suitable method for partially drying the cellulosic feedstock 50, such as drying by evaporation employing heat treatment, such as solar heat or placing the cellulosic feedstock 50 in a greenhouse, cryogenic treatment, vacuum, a press, such as a screw press, a drum dryer or a combination thereof.

It is appreciated that drying device 110 may be obviated.

The cellulosic feedstock 50 may be introduced into an oil enrichment device 112 operative to introduce any suitable oil into the cellulosic feedstock 50, it being appreciated that the oil enrichment device 112 may be obviated.

Thereafter a resultant combustion product 120 may be packaged in a packaging device 124 by any suitable means, such as by employing vacuum packing or pellet packing in a pellet machine, for example, it being appreciated that packaging device 124 may be obviated.

It is appreciated that the order of using the devices described hereinabove may be alternated so as to produce combustion product 120 from cellulosic feedstock 50.

A skilled artisan will appreciate that in the process of producing combustion product 120 some of the devices described hereinabove may be obviated without compromising the quality of the produced combustion product 120.

The resulting combustion product 120 is obtained from the system described hereinabove. The combustion product 120 is a composition substantially comprising an oil content of 1-15% thereof; a cellulose content of 40-90% thereof; a hemicellulose content of 2-20% thereof; a lignin content of less than 12% thereof; a nitrogen containing organic compound content of up to 15% thereof; a protein containing organic compound content of up to 15% thereof; a sand content of less than 5% thereof; a mineral content of less than 5% thereof and a dirt content of less than 5% thereof. It is noted that the oil in the combustion product 120 enhances the combustion process. The combustion product 120 is used for combustion of materials and may be used, for example, instead of coal.

It is noted that the oil content may be an oil content of 1-15% thereof, an oil content of 1% thereof, an oil content of 1-2% thereof, an oil content of 1-3% thereof, an oil content of 1-4% thereof, an oil content 1-5% thereof, an oil content of 1-6% thereof, an oil content of 1-7% thereof, an oil content of 1-8% thereof, an oil content of 1-9% thereof, an oil content of 1-10% thereof, an oil content of 1-11% thereof, an oil content of 1-12% thereof, an oil content of 1-13% thereof, an oil content of 1-14% thereof or an oil content of 15% thereof.

The cellulose content may be a cellulose content of 40-45% thereof, a cellulose content of 45-50% thereof, a cellulose content of 50-55% thereof, a cellulose content of 55-60% thereof, a cellulose content of 60-65% thereof, a cellulose content of 65-70% thereof, a cellulose content of 70-75% thereof, a cellulose content of 75-80% thereof, a cellulose content of 80-85% thereof or a cellulose content of 85-90% thereof.

The hemicellulose content may be a hemicellulose content of 2% thereof, a hemicellulose content of 2-3% thereof, a hemicellulose content of 2-4% thereof, a hemicellulose content of 2-5% thereof; a hemicellulose content of 2-6% thereof, a hemicellulose content of 2-7% thereof, a hemicellulose content of 2-8% thereof, a hemicellulose content of 2-9% thereof, a hemicellulose content of 2-10% thereof, a hemicellulose content of 2-11% thereof, a hemicellulose content of 2-12% thereof, a hemicellulose content of 2-13% thereof, a hemicellulose content of 2-14% thereof, a hemicellulose content of 2-15% thereof, a hemicellulose content of 2-16% thereof, a hemicellulose content of 2-17% thereof, a hemicellulose content of 2-18% thereof, a hemicellulose content of 2-19% thereof or a hemicellulose content of 20% thereof.

The lignin content may be a lignin content of less than 12% thereof, a lignin content of less than 11% thereof, a lignin content of less than 10% thereof, a lignin content of less than 9% thereof, a lignin content of less than 8% thereof, a lignin content of less than 7% thereof, a lignin content of less than 6% thereof ,a lignin content of less than 5% thereof, a lignin content of less than 4% thereof, a lignin content of less than 3% thereof, a lignin content of less than 2% thereof or a lignin content of less than 1% thereof.

The nitrogen containing organic compound content may be a content of up to 1% thereof, a nitrogen containing organic compound content of up to 2% thereof, a nitrogen containing organic compound content of up to 3% thereof, a nitrogen containing organic compound content of up to 4% thereof, a nitrogen containing organic compound content of up to 5% thereof, a nitrogen containing organic compound content of up to 6% thereof, a nitrogen containing organic compound content of up to 7% thereof, a nitrogen containing organic compound content of up to 8% thereof, a nitrogen containing organic compound content of up to 9% thereof, a nitrogen containing organic compound content of up to 10% thereof, a nitrogen containing organic compound content of up to 11% thereof, a nitrogen containing organic compound content of up to 12% thereof, a nitrogen containing organic compound content of up to 13% thereof, a nitrogen containing organic compound content of up to 14% thereof or a nitrogen containing organic compound content of up to 15% thereof.

The protein containing organic compound content maybe a content of up to 1% thereof, a protein containing organic compound content of up to 2% thereof, a protein containing organic compound content of up to 3% thereof, a protein containing organic compound content of up to 4% thereof, a protein containing organic compound content of up to 5% thereof, a protein containing organic compound content of up to 6% thereof, a protein containing organic compound content of up to 7% thereof, a protein containing organic compound content of up to 8% thereof, a protein containing organic compound content of up to 9% thereof, a protein containing organic compound content of up to 10% thereof, a protein containing organic compound content of up to 11% thereof, a protein containing organic compound content of up to 12% thereof, a protein containing organic compound content of up to 13% thereof, a protein containing organic compound content of up to 14% thereof or a protein containing organic compound content of up to 15% thereof.

The sand content may be less than 5% thereof, less than 4% thereof, less than 3% thereof, less than 2% thereof, less than 1% thereof or less than 0.5% thereof. The mineral content may be less than 5% thereof, less than 4% thereof, less than 3% thereof, less than 2% thereof, less than 1% thereof or less than 0.5% thereof. The dirt content may be less than 5% thereof, less than 4% thereof, less than 3% thereof, less than 2% thereof, less than 1% thereof or less than 0.5% thereof.

The caloric value of the combustion product 120 may be in the range of 5000-16000 BTU/Pound. It is noted that the caloric value of the combustion product 120 may be in the range of 5000-6000 BTU/Pound; in the range of 6000-7000 BTU/Pound; in the range of 7000-8000 BTU/Pound; in the range of 8000-9000 BTU/Pound; in the range of 9000-10000 BTU/Pound; in the range of 10000-11000 BTU/Pound; in the range of 11000-12000 BTU/Pound; in the range of 12000-13000 BTU/Pound; in the range of 13000-14000 BTU/Pound; in the range of 14000-15000 BTU/Pound or in the range of 15000-16000 BTU/Pound.

### EXAMPLE 3

### Experimental Procedure:

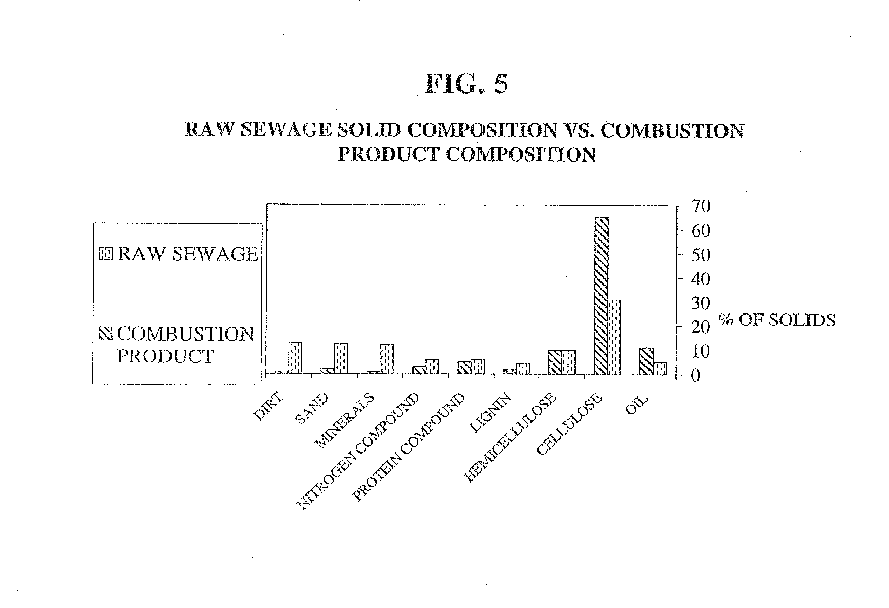

100 m³ of raw sewage, including a solid portion of approximately 0.1% of the raw sewage, was obtained from a municipal sewage waste system. As seen in Fig. 5, the composition of the raw sewage solid portion generally comprises 5% oil, 31 % cellulose, 10% hemicellulose, 4.5% lignin, 6% protein containing organic compound, 6% nitrogen containing organic compound, 12.1 % minerals, 12.5% sand and 12.9% dirt.

The raw sewage was introduced into a hydrocyclone centrifuge at a pressure of 3 Atm for initial sand removal from the raw sewage.

Thereafter the raw sewage was introduced into an entrapping device formed of a net of a 250 micron mesh. Approximately 50Kg of solids were entrapped within the net. The residual liquid portion was discarded.

Secondary sand removal was performed by sedimentation in a conical-shaped pool wherein the sand sunk to the bottom of the pool. The sedimented sand was discarded.

Dirt removal was performed thereafter in a hydrocyclone centrifuge at a pressure of 3 Atm. The remaining portion was introduced into a magnet containing device wherein a portion of iron was magnetically removed.

The solid portion was introduced into a sterilizer at a temperature of 85°C for 10 minutes.

Mineral removal was performed by use of a chemical wash wherein the solid portion was boiled at 85°C for one hour with a solution of distilled water mixed with a 37% hydrochloric acid in a boiling apparatus. The boiled solid portion was thereafter washed 2 times with deionized water.

### The solid portion was pressed in a screw press for partial removal of liquids therefrom.

The resulting cellulosic feedstock was thereafter ground in a stone grinder to a particle length of less than one millimeter.

The nitrogen and protein containing compounds were removed by pH Gradient Electrophoresis employing a 10% hydrogen chloride wash.

The resulting portion was partially dried by a drum dryer wherein 80% of the liquids were dried.

The partially dried portion was pressed by a screw press and thereafter packed in a pellet machine.

### Experimental Results:

As seen in Figure 5, a resulting combustion product composition was produced in the system described hereinabove wherein the combustion product composition generally comprises 11% oil, 65% cellulose, 10% hemicellulose, 2% lignin, 5% protein containing organic compound, 3% nitrogen containing organic compound, 1 % minerals, 2% sand and 1% dirt. The caloric value of the resulting combustion product is approximately 9000 BTU/Pound.

### EXAMPLE 4

### Experimental Procedure:

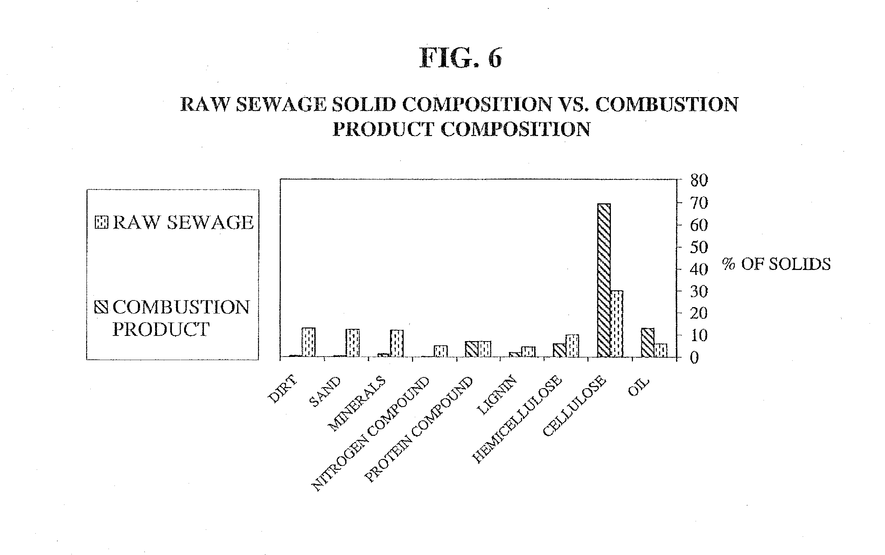

120 m³ of raw sewage, including a solid portion of approximately 0.05% of the raw sewage, was obtained from a municipal sewage waste system. As seen in Fig. 6, the composition of the raw sewage solid portion generally comprises 6% oil, 30% cellulose, 10% hemicellulose, 4.5% lignin, 7% protein containing organic compound, 5% nitrogen containing organic compound, 12.1 % minerals, 12.5% sand and 12.9% dirt.

The raw sewage was introduced into a hydrocyclone centrifuge at a pressure of 3 Atm for initial sand and dirt removal from the raw sewage.

Thereafter the raw sewage was introduced into a vibration separator commercially available from the Sewco company of 8029 US Highway 25

Florence, KY, USA under catalogue model SS of Sanitary Separators for entrapping solids therein by use of vibration. The residual liquid portion was discarded.

Secondary sand removal was performed by sedimentation in a conical-shaped pool wherein the sand sunk to the bottom of the pool. The sedimented sand was discarded.

The solid portion was pasteurized in a pasteurization device at a temperature of 72 °C for two minutes for partial sterilization thereof.

Mineral removal was performed by use of a chemical wash wherein the solid portion was washed with a solution of distilled water mixed with a 2% hydrochloric acid. The solid portion was thereafter washed with soft water.

The solid portion was pressed in a screw press for partial removal of liquids therefrom.

The resultant cellulosic feedstock was ground in a ball grinder to 100 microns. The ground cellulosic feedstock was pressed in a screw press, dried in a greenhouse for 4 days and thereafter packed in a pellet machine.

### Experimental Results:

As seen in Figure 6, a resulting combustion product composition was produced in the system described hereinabove wherein the combustion product composition generally comprises 13% oil, 69.4% cellulose, 6% hemicellulose, 2% lignin, 7% protein containing organic compound, 0.3% nitrogen containing organic compound, 1.3 % minerals, 0.5% sand and 0.5% dirt. The caloric value of the resulting combustion product is approximately 9000 BTU/Pound.

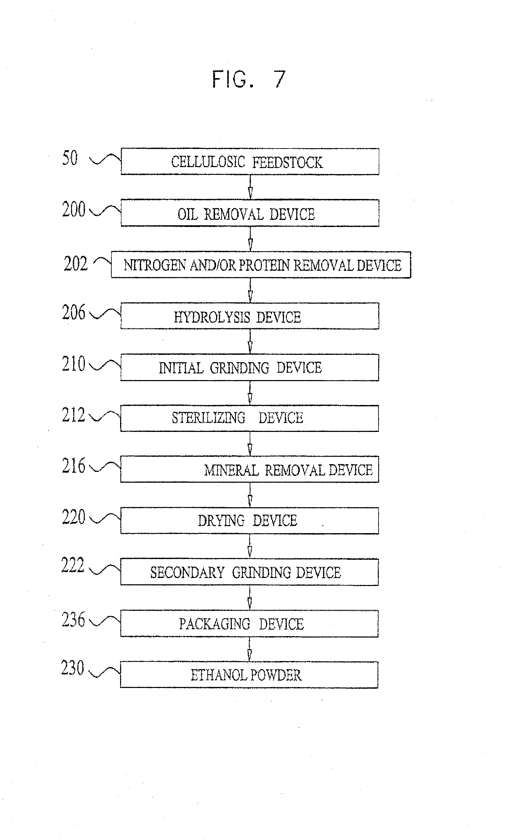

Reference is now made to Fig. 7, which is a simplified block diagram of a system for manufacturing ethanol powder from cellulosic feedstock, constructed and operative in accordance with an embodiment of the present invention.

As seen in Fig. 7, the cellulosic feedstock 50 may be introduced into an oil removal device 200 for removal of oil therefrom in any suitable manner, such as by an oil filter which may comprise a chemical filter, such as a silica containing filter, a biological filter, such as a cellulose containing filter, a device employing DAF, a conveyor belt, such as a belt formed of conveyor belt mesh, a centrifuge, a flow centrifuge, a filter press, a screw press, a disk filter, a media filter, such as a media filter comprising fibers, nettings, a filter employing backflushing technology. A filter employing backflushing technology may be commercially available from the Salsnes Filter AS company of 279 Postboks, Namsos 7801, Norway, under the catalogue number of SF 6000. The chemical filter may include chemical washes, such as an hexane (CH₃(CH₂)₄CH₃) wash, which is operative to be dissipated along with oil adsorbed thereto.

It is appreciated that oil removal device 200 may be obviated.

The cellulosic feedstock 50 may be introduced into a nitrogen and/or protein removal device 202 for removal of the nitrogen and protein containing compounds by any suitable means. Nitrogen and/or protein removal device 202 may be formed of any one of the abovementioned apparati forming nitrogen and/or protein removal device 104 of Fig. 4.

It is appreciated that nitrogen and/or protein removal device 202 may be obviated.

The cellulosic feedstock 50 may be introduced into any suitable hydrolysis device 206 for hydrolyzing cellulosic feedstock 50. It is appreciated that hydrolysis device 206 may be obviated.

The cellulosic feedstock 50 may be ground in an initial grinding device 210 by any suitable means. Grinding device 210 may be formed of any one of the abovementioned apparati forming grinding device 102 of Fig. 4.

It is appreciated that grinding device 210 may be obviated.

The cellulosic feedstock 50 may be introduced into a sterilizing device 212 for sterilizing cellulosic feedstock 50 by any suitable means. Sterilizing device 212 maybe formed of any one of the abovementioned apparati forming sterilizing device 40 of Fig. 1. Alternatively, the cellulosic feedstock 50 may be partially sterilized, such as by being introduced into a pasteurization device for pasteurizing the cellulosic feedstock 50.

It is appreciated that the sterilizing device 212 may be obviated.

The cellulosic feedstock 50 may be introduced into a secondary mineral removal device 216 for further removal of minerals within cellulosic feedstock 50 by any suitable means. Secondary mineral removal device 216 may be formed of any one of the abovementioned apparati forming mineral removal device 42 of Fig. 1.

It is appreciated that secondary mineral removal device 216 may be obviated.

The cellulosic feedstock 50 may be introduced into a drying device 220 for at least partial drying of cellulosic feedstock 50 by any suitable means. Drying device 220 may be formed of any one of the abovementioned apparati forming drying device 110 of Fig. 4.

It is appreciated that drying device 220 may be obviated.

The cellulosic feedstock 50 may be ground again in a secondary grinding device 222 by any suitable means. Grinding device 222 may be formed of any one of the abovementioned apparati forming grinding device 102 of Fig. 4. The cellulosic feedstock 50 maybe ground to any suitable particle size, such as to particles with a size of approximately less than 500 microns so as to form a powder therefrom.

It is appreciated that grinding device 222 may be obviated.

A resulting ethanol powder 230 may be thereafter packaged in a packaging device 236 by any suitable means, such as by employing vacuum packing or pellet packing in a pellet machine, for example. It is appreciated that packaging device 236 may be obviated.

It is appreciated that the order of using the devices described hereinabove may be alternated so as to produce ethanol powder 230 from cellulosic feedstock 50.

A skilled artisan will appreciate that in the process of producing ethanol powder 230 some of the devices described hereinabove may be obviated without compromising the quality of the produced ethanol powder 230.

The resulting ethanol powder 230 is obtained from the system described hereinabove. The ethanol powder 230 is a composition substantially comprising an oil content of 1-10% thereof; a cellulose content of 50-99% thereof; a hemicellulose content of 2-20% thereof; a lignin content of less than 12% thereof; a nitrogen containing organic compound content of up to 15% thereof; a protein containing organic compound content of up to 15% thereof; a sand content of less than 5% thereof; a mineral content of less than 5% thereof and a dirt content of less than 5% thereof.

It is noted that the oil content may be an oil content of 1% thereof, an oil content of 1-2% thereof, an oil content of 1-3% thereof, an oil content of 1-4% thereof, an oil content 1-5% thereof, an oil content of 1-6% thereof, an oil content of 1-7% thereof, an oil content of 1-8% thereof. an oil content of 1-9% thereof or an oil content of 10% thereof.

The cellulose content may be a cellulose content of 50-55% thereof, a cellulose content of 55-60% thereof, a cellulose content of 60-65% thereof, a cellulose content of 65-70% thereof, a cellulose content of 70-75% thereof, a cellulose content of 75-80%, thereof, a cellulose content of 80-85% thereof, a cellulose content of 85-90% thereof, a cellulose content of 90-95% thereof or a cellulose content of 95-99% thereof.

The hemicellulose content may be a hemicellulose content of 2% thereof, a hemicellulose content of 2-3% thereof, a hemicellulose content of 2-4% thereof, a hemicellulose content of 2-5% thereof; a hemicellulose content of 2-6% thereof, a hemicellulose content of 2-7% thereof, a hemicellulose content of 2-8% thereof, a hemicellulose content of 2-9% thereof, a hemicellulose content of 2-10% thereof, a hemicellulose content of 2-11% thereof, a hemicellulose content of 2-12% thereof, a hemicellulose content of 2-13% thereof, a hemicellulose content of 2-14% thereof, a hemicellulose content of 2-15% thereof, a hemicellulose content of 2-16% thereof, a hemicellulose content of 2-17% thereof, a hemicellulose content of 2-18% thereof, a hemicellulose content of 2-19% thereof or a hemicellulose content of 20% thereof.

The lignin content may be a lignin content of less than 12% thereof, a lignin content of less than 11% thereof, a lignin content of less than 10% thereof, a lignin content of less than 9% thereof, a lignin content of less than 8% thereof, a lignin content of less than 7% thereof, a lignin content of less than 6% thereof ,a lignin content of less than 5% thereof, a lignin content of less than 4% thereof, a lignin content of less than 3% thereof, a lignin content of less than 2% thereof or a lignin content of less than 1% thereof.

The nitrogen containing organic compound content may be a content of up to 1% thereof, a nitrogen containing organic compound content of up to 2% thereof, a nitrogen containing organic compound content of up to 3% thereof, a nitrogen containing organic compound content of up to 4% thereof, a nitrogen containing organic compound content of up to 5% thereof, a nitrogen containing organic compound content of up to 6% thereof, a nitrogen containing organic compound content of up to 7% thereof, a nitrogen containing organic compound content of up to 8% thereof, a nitrogen containing organic compound content of up to 9% thereof, a nitrogen containing organic compound content of up to 10% thereof, a nitrogen containing organic compound content of up to 11% thereof, a nitrogen containing organic compound content of up to 12% thereof, a nitrogen containing organic compound content of up to 13% thereof, a nitrogen containing organic compound content of up to 14% thereof or a nitrogen containing organic compound content of up to 15% thereof.

The protein containing organic compound content may be a protein containing organic compound content of up to 1 % thereof, a protein containing organic compound content of up to 2% thereof, a protein containing organic compound content of up to 3% thereof, a protein containing organic compound content of up to 4% thereof, a protein containing organic compound content of up to 5% thereof, a protein containing organic compound content of up to 6% thereof, a protein containing organic compound content of up to 7% thereof, a protein containing organic compound content of up to 8% thereof, a protein containing organic compound content of up to 9% thereof, a protein containing organic compound content of up to 10% thereof, a protein containing organic compound content of up to 11% thereof, a protein containing organic compound content of up to 12% thereof, a protein containing organic compound content of up to 13% thereof, a protein containing organic compound content of up to 14% thereof or a protein containing organic compound content of up to 15% thereof.

The sand content may be less than 5% thereof, less than 4% thereof, less than 3% thereof, less than 2% thereof, less than 1% thereof or less than 0.5% thereof. The mineral content may be less than 5% thereof, less than 4% thereof, less than 3% thereof, less than 2% thereof, less than 1% thereof or less than 0.5% thereof. The dirt content may be less than 5% thereof, less than 4% thereof, less than 3% thereof, less than 2% thereof, less than 1% thereof or less than 0.5% thereof.

The ethanol powder 230 may comprise particles with a size of 0.01 microns-100 mm, a size of 0.01 - 1 microns, a size of 1- 5 microns, a size of 5-10 microns, a size of 10-20 microns, a size of 20-30 microns, a size of 30-40 microns, a size of 40-50 microns, a size of 50-60 microns, a size of 60-70 microns, a size of 70-80 microns, a size of 80-90 microns, a size of 90-100 microns, a size of 100-150 microns, a size of 150-200 microns, a size of 200-250 microns, a size of 250-300 microns, a size of 300-350 microns, a size of 350-400 microns, a size of 400-450 microns, a size of 450-500 microns, a size of 500-550 microns, a size of 550-600 microns, a size of 600-650 microns, a size of 650-700 microns, a size of 750-800 microns, a size of 800-850 microns, a size of 850-900 microns, a size of 900-950 microns, a size of 950-1000 microns, a size of 1-5 mm, a size of 5-10 mm, a size of 10-15 mm, a size of 15-20 mm, a size of 20-25 mm, a size of 25-30 mm, a size of 30-35 mm, a size of 35-40 mm, a size of 40-45 mm, a size of 45-50 mm, a size of 50-55 mm, a size of 55-60 mm, a size of 60-65 mm, a size of 65-70 mm, a size of 70-75 mm, a size of 75-80 mm, a size of 80-85 mm, a size of 85-90 mm, a size of 90-95 mm or a size of 95-100 mm.

The caloric value of the ethanol powder 230 may be in the range of 5000-16000 BTU/Pound. It is noted that the caloric value of the ethanol powder 230 may be in the range of 5000-6000 BTU/Pound; in the range of 6000-7000 BTU/Pound; in the range of 7000-8000 BTU/Pound; in the range of 8000-9000 BTU/Pound; in the range of 9000-10000 BTU/Pound; in the range of 10000-11000 BTU/Pound; in the range of 11000-12000 BTU/Pound; in the range of 12000-13000 BTU/Pound; in the range of 13000-14000 BTU/Pound; in the range of 14000-15000 BTU/Pound or in the range of 15000-16000 BTU/Pound.

It is noted that the ethanol may not be ground to powder but rather remain in a fibrous form. Additionally, any form of an ethanol-containing product may be produced in the system described hereinabove. For example, liquid ethanol may produced within the system described hereinabove.

### EXAMPLE 5

### Experimental Procedure:

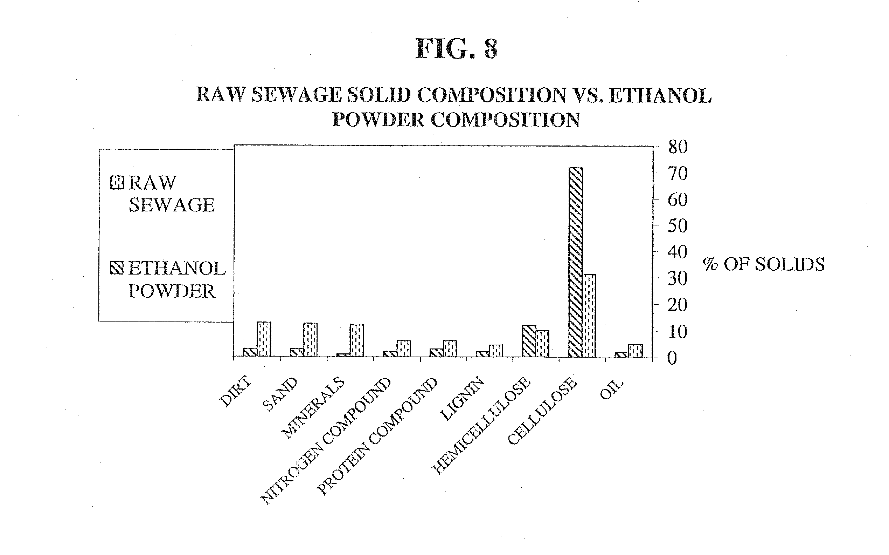

100 m³ of raw sewage, including a solid portion of approximately 0.1% of the raw sewage, was obtained from a municipal sewage waste system. As seen in Fig. 8, the composition of the raw sewage solid portion generally comprises 5% oil, 31% cellulose, 10% hemicellulose, 4.5% lignin, 6% protein containing organic compound, 6% nitrogen containing organic compound, 12.1 % minerals, 12.5% sand and 12.9% dirt.

The raw sewage was introduced into a hydrocyclone centrifuge at a pressure of 3 Atm for initial sand removal from the raw sewage.

Thereafter the raw sewage was introduced into an entrapping device formed of a net of a 250 micron mesh. Approximately 50Kg of solids were entrapped within the net. The residual liquid portion was discarded.

Secondary sand removal was performed by sedimentation in a conical-shaped pool wherein the sand sunk to the bottom of the pool. The sedimented sand was discarded.

Dirt removal was performed thereafter in a hydrocyclone centrifuge at a pressure of 3 Atm. The remaining portion was introduced into a magnet containing device wherein a portion of iron was magnetically removed.

The solid portion was introduced into a sterilizer at a temperature of 85°C for 10 minutes.

Mineral removal was performed by use of a chemical wash wherein the solid portion was boiled at 85°C for one hour with a solution of distilled water mixed with a 37% hydrochloric acid in a boiling apparatus. The boiled solid portion was thereafter washed 2 times with deionized water.

The solid portion was pressed in a screw press for partial removal of liquids therefrom.

Oil was removed from the resultant cellulosic feedstock by washing the resulting portion with a 1 % hexane containing wash. Thereafter the solid portion and hexane containing wash mixture was heated to 80°C for dissipating the hexane containing wash along with a portion of the oil.

A portion of the nitrogen and protein containing compounds were removed from the cellulosic feedstock by pH Gradient Electrophoresis employing a 10% hydrogen chloride wash.

The cellulosic feedstock was thereafter ground in a stone grinder.

The solid portion was partially dried in a drum dryer wherein 80% of the liquids were dried.

The partially dried portion was ground in a ball grinder to a powder with a particle length of less than 500 microns.

The powder was thereafter packed.

### Experimental Results:

As seen in Figure 8, a resulting ethanol powder composition was produced in the system described hereinabove wherein the ethanol powder composition generally comprises 2% oil, 72% cellulose, 12% hemicellulose, 2% lignin, 3% protein containing organic compound, 2% nitrogen containing organic compound, 1 % minerals, 3% sand and 3% dirt. The caloric value of the resulting ethanol powder is approximately 6000 BTU/Pound. The average particle diameter of the ethanol powder is less than 100 microns, approximately.

### EXAMPLE 6

### Experimental Procedure:

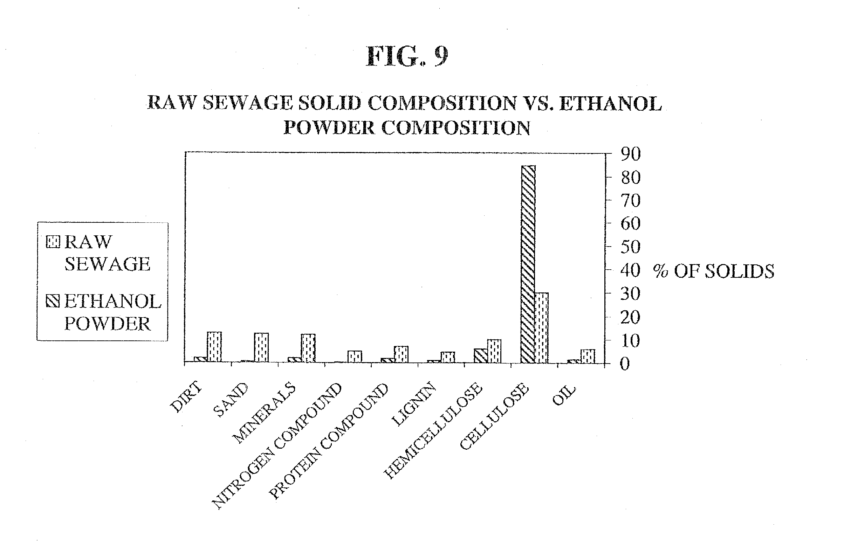

120 m³ of raw sewage, including a solid portion of approximately 0.05% of the raw sewage, was obtained from a municipal sewage waste system. As seen in Fig. 9, the composition of the raw sewage solid portion generally comprises 6% oil, 30% cellulose, 10% hemicellulose, 4.5% lignin, 7% protein containing organic compound, 5% nitrogen containing organic compound, 12.1 % minerals, 12.5% sand and 12.9% dirt.

The raw sewage was introduced into a hydrocyclone centrifuge at a pressure of 3 Atm for initial sand and dirt removal from the raw sewage.

Thereafter the raw sewage was introduced into a vibration separator commercially available from the Sewco company of 8029 US Highway 25

Florence, KY, USA under catalogue model SS of Sanitary Separators for entrapping solids therein by use of vibration. The residual liquid portion was discarded.

Secondary sand removal was performed by sedimentation in a conical-shaped pool wherein the sand sunk to the bottom of the pool. The sedimented sand was discarded.

The solid portion was pasteurized in a pasteurization device at a temperature of 72 °C for two minutes for partial sterilization thereof.

Mineral removal was performed by use of a chemical wash wherein the solid portion was washed with a solution of distilled water mixed with a 2% hydrochloric acid. The solid portion was thereafter washed with soft water.

The solid portion was pressed in a screw press for partial removal of liquids therefrom.

Oil was removed from the resultant cellulosic feedstock by washing the resulting portion with a 1 % hexane containing wash. Thereafter the solid portion and hexane containing wash mixture was heated to 80°C for dissipating the hexane containing wash along with a portion of the oil.

The cellulosic feedstock was dried in an oven at 105°C and thereafter ground to 100 microns in a stone grinder.

### Experimental Results:

As seen in Figure 9, a resulting ethanol powder composition was produced in the system described hereinabove wherein the ethanol powder composition generally comprises 1.5 % oil, 84.4% cellulose, 6% hemicellulose, 1% lignin, 2% protein containing organic compound, 0.2% nitrogen containing organic compound, 2% minerals, 0.5% sand and 2% dirt. The caloric value of the resulting ethanol powder is approximately 6000 BTU/Pound. The average particle diameter of the ethanol powder is 100 microns, approximately.

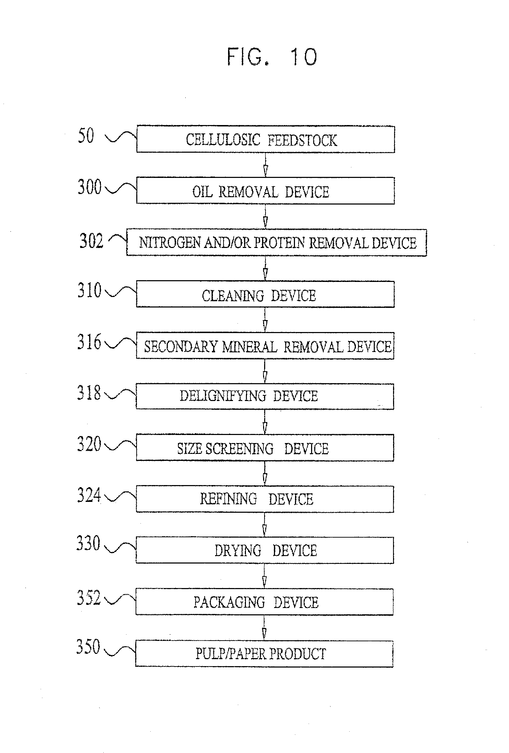

Reference is now made to Fig. 10, which is a simplified block diagram of a system for manufacturing a pulp or paper product from cellulosic feedstock, constructed and operative in accordance with an embodiment of the present invention. As seen in Fig. 10, the cellulosic feedstock 50 may be introduced into an oil removal device 300 for removal of oil therefrom in any suitable manner. Oil removal device 300 may be formed of any one of the abovementioned apparati forming oil removal device 200 of Fig. 7.

It is appreciated that oil removal device 300 may be obviated.

The cellulosic feedstock 50 may be introduced into a nitrogen and/or protein removal device 302 for removal of the nitrogen and protein containing compounds by any suitable means. Nitrogen and/or protein removal device 302 may be formed of any one of the abovementioned apparati forming nitrogen and/or protein removal device 104 of Fig. 4.

It is appreciated that nitrogen and/or protein removal device 302 may be obviated.

The cellulosic feedstock may be introduced into a cleaning device 310, such as a cleaning device employing a hydrolyser or any other suitable means.

It is appreciated that cleaning device 310 may be obviated.

The cellulosic feedstock 50 may be introduced into a secondary mineral removal device 316 for further removal of minerals within cellulosic feedstock 50 by any suitable means. Secondary mineral removal device 316 may be formed of any one of the abovementioned apparati forming mineral removal device 42 of Fig. 1.

It is appreciated that secondary mineral removal device 316 may be obviated.

The cellulosic feedstock 50 may be introduced into a delignifying device 318 for removing a portion of the lignin content from cellulosic feedstock 50. Delignifying device 318 may employ any suitable method for delignifying the cellulosic feedstock 50, such as chemical delignification using oxygen, ozone or a proxy, for example.

It is appreciated that delignifying device 318 may be obviated.

The particles of the cellulosic feedstock 50 may be separated according to size in a size screening device 320 by any suitable means, such as by use of nettings with different mesh sizes. The cellulosic feedstock 50 may be separated into a plurality of sizes. For example, the cellulosic feedstock 50 may be introduced into nettings operative to trap cellulosic feedstock with a particle size of at least 400 microns or cellulosic feedstock 50 with a particle size in the range of 300 - 400 microns or cellulosic feedstock 50 with a particle size in the range of 200 - 300 microns or cellulosic feedstock 50 with a particle size in the range of 100 - 200 microns or cellulosic feedstock 50 with a particle size less than 100 microns. The cellulosic feedstock 50 is separated according to size so as to be used to produce a variety of products. For example, the cellulosic feedstock 50 with a particle size of at least 400 microns is used to produce newspaper and the cellulosic feedstock 50 with a particle size in the range of 100 - 400 microns is used to produce gray paper.

It is appreciated that size screening device 320 may be obviated.

The cellulosic feedstock 50 may be introduced into a refining device 324 for enlarging a surface area of the cellulosic feedstock fiber, typically by applying pressure thereon by any suitable means. Enlarging the surface area of the fibers allows for improved adherence of the fibers to each other so as to produce a paper or pulp product therefrom.

It is appreciated that refining device 324 may be obviated.

The cellulosic feedstock 50 may be introduced into a drying device 330 for at least partial drying of cellulosic feedstock 50 by any suitable means. Drying device 330 may be formed of any one of the abovementioned apparati forming drying device 110 of Fig. 4.

It is appreciated that drying device 330 may be obviated.

A resultant pulp or paper product 350 may be thereafter packaged in a packaging device 352 by any suitable means, such as by employing vacuum packing, for example. It is appreciated that packaging device 352 may be obviated.

It is appreciated that the order of using the devices described hereinabove may be alternated so as to produce the pulp or paper product 350 from cellulosic feedstock 50.

A skilled artisan will appreciate that in the process of producing the pulp or paper product 350 some of the devices described hereinabove maybe obviated without compromising the quality of the produced pulp or paper product 350.

The resulting pulp or paper product 350 is obtained from the system described hereinabove. The pulp or paper product 350 is a composition substantially comprising an oil content of 1-10% thereof; a cellulose content of 50-90% thereof; a hemicellulose content of 2-20% thereof; a lignin content of less than 4% thereof; a nitrogen containing organic compound content of up to 15% thereof; a protein containing organic compound content of up to 15% thereof; a sand content of less than 5% thereof; a mineral content of less than 5% thereof and a dirt content of less than 5% thereof.

It is noted that the oil content may be an oil content of 1% thereof, an oil content of 1-2% thereof, an oil content of 1-3% thereof, an oil content of 1-4% thereof, an oil content 1-5% thereof, an oil content of 1-6% thereof, an oil content of 1-7% thereof, an oil content of 1-8% thereof, an oil content of 1-9% thereof or an oil content of 10% thereof.

The cellulose content may be a cellulose content of 50-55% thereof, a cellulose content of 55-60% thereof, a cellulose content of 60-65% thereof, a cellulose content of 65-70% thereof, a cellulose content of 70-75% thereof, a cellulose content of 75-80% thereof, a cellulose content of 80-85% thereof or a cellulose content of 85-90% thereof.

The hemicellulose content may be a hemicellulose content of 2% thereof, a hemicellulose content of 2-3% thereof, a hemicellulose content of 2-4% thereof, a hemicellulose content of 2-5% thereof; a hemicellulose content of 2-6% thereof, a hemicellulose content of 2-7% thereof, a hemicellulose content of 2-8% thereof, a hemicellulose content of 2-9% thereof, a hemicellulose content of 2-10% thereof, a hemicellulose content of 2-11% thereof, a hemicellulose content of 2-12% thereof, a hemicellulose content of 2-13% thereof, a hemicellulose content of 2-14% thereof, a hemicellulose content of 2-15% thereof, a hemicellulose content of 2-16% thereof, a hemicellulose content of 2-17% thereof, a hemicellulose content of 2-18% thereof, a hemicellulose content of 2-19% thereof or a hemicellulose content of 20% thereof.

The lignin content may be a lignin content of less 4% thereof, a lignin content of less than 3% thereof, a lignin content of less than 2% thereof or a lignin content of less than 1% thereof.

The nitrogen containing organic compound content may be a content of up to 1% thereof, a nitrogen containing organic compound content of up to 2% thereof, a nitrogen containing organic compound content of up to 3% thereof, a nitrogen containing organic compound content of up to 4% thereof, a nitrogen containing organic compound content of up to 5% thereof, a nitrogen containing organic compound content of up to 6% thereof, a nitrogen containing organic compound content of up to 7% thereof, a nitrogen containing organic compound content of up to 8% thereof, a nitrogen containing organic compound content of up to 9% thereof, a nitrogen containing organic compound content of up to 10% thereof, a nitrogen containing organic compound content of up to 11% thereof, a nitrogen containing organic compound content of up to 12% thereof, a nitrogen containing organic compound content of up to 13% thereof, a nitrogen containing organic compound content of up to 14% thereof or a nitrogen containing organic compound content of up to 15% thereof.

The protein containing organic compound content may be a content of up to 1 % thereof, a protein containing organic compound content of up to 2% thereof, a protein containing organic compound content of up to 3% thereof, a protein containing organic compound content of up to 4% thereof, a protein containing organic compound content of up to 5% thereof, a protein containing organic compound content of up to 6% thereof, a protein containing organic compound content of up to 7% thereof, a protein containing organic compound content of up to 8% thereof, a protein containing organic compound content of up to 9% thereof, a protein containing organic compound content of up to 10% thereof, a protein containing organic compound content of up to 11% thereof, a protein containing organic compound content of up to 12% thereof, a protein containing organic compound content of up to 13% thereof, a protein containing organic compound content of up to 14% thereof or a protein containing organic compound content of up to 15% thereof.

The sand content maybe less than 5% thereof, less than 4% thereof, less than 3% thereof, less than 2% thereof, less than 1% thereof or less than 0.5% thereof. The mineral content may be less than 5% thereof, less than 4% thereof, less than 3% thereof, less than 2% thereof, less than 1% thereof or less than 0.5% thereof. The dirt content may be less than 5% thereof, less than 4% thereof, less than 3% thereof, less than 2% thereof, less than 1% thereof or less than 0.5% thereof.

The pulp or paper product 350 may comprise particles with a size of 0.01 microns-100 mm, a size of 0.01 - 1 microns, a size of 1 - 5 microns, a size of 5-10 microns, a size of 10-20 microns, a size of 20-30 microns, a size of 30-40 microns, a size of 40-50 microns, a size of 50-60 microns, a size of 60-70 microns, a size of 70-80 microns, a size of 80-90 microns, a size of 90-100 microns, a size of 100-150 microns, a size of 150-200 microns, a size of 200-250 microns, a size of 250-300 microns, a size of 300-350 microns, a size of 350-400 microns, a size of 400-450 microns, a size of 450-500 microns, a size of 500-550 microns, a size of 550-600 microns, a size of 600-650 microns, a size of 650-700 microns, a size of 750-800 microns, a size of 800-850 microns, a size of 850-900 microns, a size of 900-950 microns, a size of 950-1000 microns, a size of 1-5 mm, a size of 5-10 mm, a size of 10-15 mm, a size of 15-20 mm, a size of 20-25 mm, a size of 25-30 mm, a size of 30-35 mm, a size of 35-40 mm, a size of 40-45 mm, a size of 45-50 mm, a size of 50-55 mm, a size of 55-60 mm, a size of 60-65 mm, a size of 65-70 mm, a size of 70-75 mm, a size of 75-80 mm, a size of 80-85 mm, a size of 85-90 mm, a size of 90-95 mm or a size of 95-100 mm

### EXAMPLE 7

### Experimental Procedure:

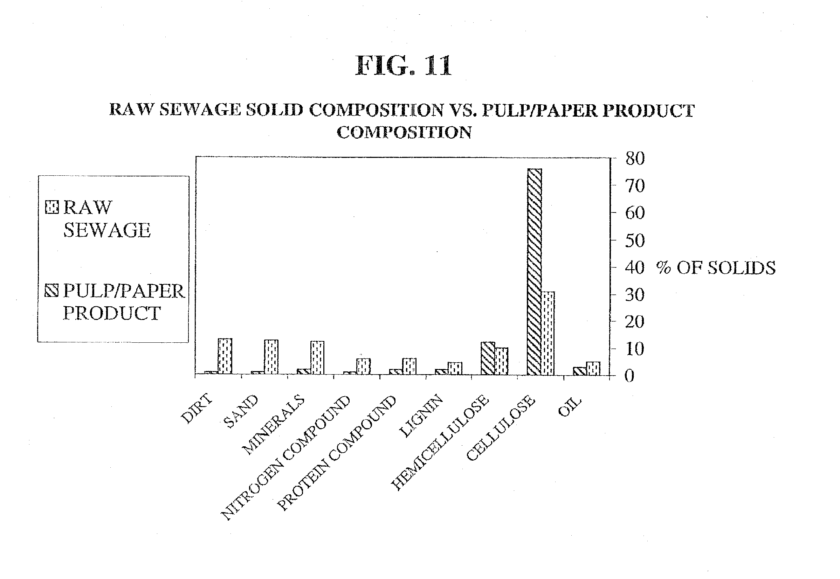

100 m³ of raw sewage, including a solid portion of approximately 0.1% of the raw sewage, was obtained from a municipal sewage waste system. As seen in Fig. 11, the composition of the raw sewage solid portion generally comprises 5% oil, 31% cellulose, 10% hemicellulose, 4.5% lignin, 6% protein containing organic compound, 6% nitrogen containing organic compound, 12.1 % minerals, 12.5% sand and 12.9% dirt.

The raw sewage was introduced into a hydrocyclone centrifuge at a pressure of 3 Atm for initial sand removal from the raw sewage.

Thereafter the raw sewage was introduced into an entrapping device formed of a net of a 250 micron mesh. Approximately 50Kg of solids were entrapped within the net. The residual liquid portion was discarded.

Secondary sand removal was performed by sedimentation in a conical-shaped pool wherein the sand sunk to the bottom of the pool. The sedimented sand was discarded.

Dirt removal was performed thereafter in a hydrocyclone centrifuge at a pressure of 3 Atm. The remaining portion was introduced into a magnet containing device wherein a portion of iron was magnetically removed.

The solid portion was introduced into a sterilizer at a temperature of 85°C for 10 minutes.

Mineral removal was performed by use of a chemical wash wherein the solid portion was boiled at 85°C for one hour with a solution of distilled water mixed with a 37% hydrochloric acid in a boiling apparatus. The boiled solid portion was thereafter washed 2 times with deionized water.

The solid portion was pressed in a screw press for partial removal of liquids therefrom.

Oil was removed from the resultant cellulosic feedstock by washing the resulting portion with a 1% hexane containing wash. Thereafter the solid portion and hexane containing wash mixture was heated to 80°C for dissipating the hexane containing wash along with a portion of the oil.

The nitrogen and protein containing compounds were removed from the cellulosic feedstock by pH Gradient Electrophoresis employing a 10% hydrogen chloride wash.

The cellulosic feedstock was delignified in a delignifying device using active oxygen.

The delignified cellulosic feedstock was introduced into a netting of a 400 micron mesh and thereafter into a netting of a 100 micron mesh for size screening thereof.

The resulting screened fibers were partially dried in a drum dryer wherein 80% of the liquids were dried.

The dried resulting fibers were thereafter packed by size to be formed into paper or may be used as pulp.

### Experimental Results:

As seen in Figure 11, a resulting pulp or paper product composition was produced in the system described hereinabove wherein the pulp or paper product composition generally comprises 3% oil, 76% cellulose, 12% hemicellulose, 2% lignin, 2% protein containing organic compound, 1% nitrogen containing organic compound, 2% minerals, 1% sand and 1% dirt. The diameter of the particles of the paper or pulp products was in the range of 50 microns - 5 mm.

### EXAMPLE 8

### Experimental Procedure:

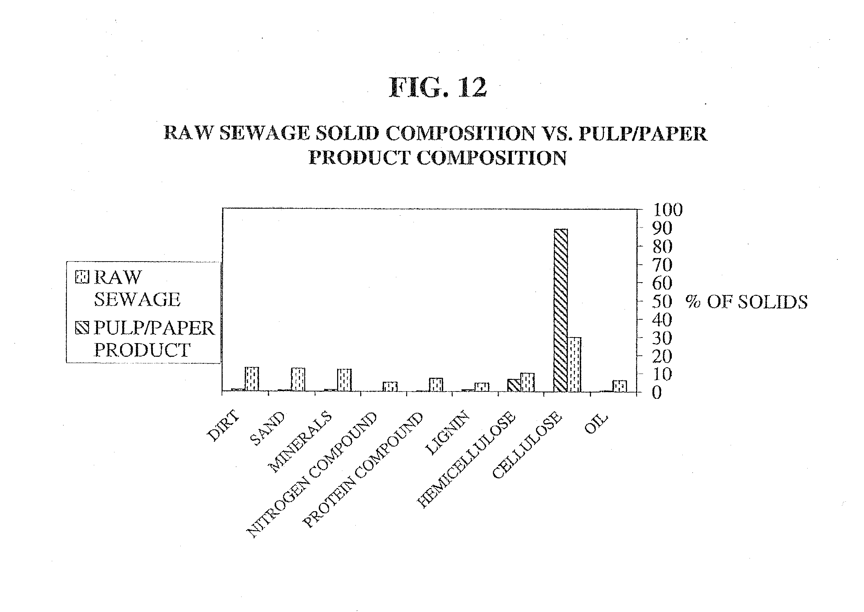

120 m³ of raw sewage, including a solid portion of approximately 0.05% of the raw sewage, was obtained from a municipal sewage waste system. As seen in Fig. 12, the composition of the raw sewage solid portion generally comprises 6% oil, 30% cellulose, 10% hemicellulose, 4.5% lignin, 7% protein containing organic compound, 5% nitrogen containing organic compound, 12.1 % minerals, 12.5% sand and 12.9% dirt.

The raw sewage was introduced into a hydrocyclone centrifuge at a pressure of 3 Atm for initial sand and dirt removal from the raw sewage.

Thereafter the raw sewage was introduced into a vibration separator commercially available from the Sewco company of 8029 US Highway 25

Florence, KY, USA under catalogue model SS of Sanitary Separators for entrapping solids therein by use of vibration. The residual liquid portion was discarded.

Secondary sand removal was performed by sedimentation in a conical-shaped pool wherein the sand sunk to the bottom of the pool. The sedimented sand was discarded.

The solid portion was pasteurized in a pasteurization device at a temperature of 72 °C for two minutes for partial sterilization thereof.

Mineral removal was performed by use of a chemical wash wherein the solid portion was washed with a solution of distilled water mixed with a 2% hydrochloric acid. The solid portion was thereafter washed with soft water.

The solid portion was pressed in a screw press for partial removal of liquids therefrom.

Oil was removed from the resultant cellulosic feedstock by washing the resulting portion with a 1 % hexane containing wash. Thereafter the resulting solid portion and wash mixture was heated to 80°C for dissipating the hexane containing wash along with a portion of the oil.

Further mineral removal was performed by use of a chemical wash wherein the solid portion was washed with a solution of distilled water mixed with a 3% hydrochloric acid. The solid portion was thereafter washed with soft water.

The cellulosic feedstock was delignified in a delignifying device using ozone.

The delignified cellulosic feedstock was introduced into a netting of a 400 micron mesh and thereafter into a netting of a 100 micron mesh for size screening thereof.

The resulting screened fibers were partially dried in a drum dryer wherein 80% of the liquids were dried.

The dried resulting fibers were thereafter packed by size to be formed into paper or may be used as pulp.

### Experimental Results:

As seen in Figure 12, a resulting pulp or paper product was produced in the system described hereinabove wherein the pulp or paper product composition generally comprises 0.5 % oil, 89% cellulose, 6.5% hemicellulose, 1% lignin, 0.3% protein containing organic compound, 0.2% nitrogen containing organic compound, 1 % minerals, 0.5% sand and 1% dirt. The diameter of the particles of the paper or pulp products was in the range of 50 microns - 5 mm.

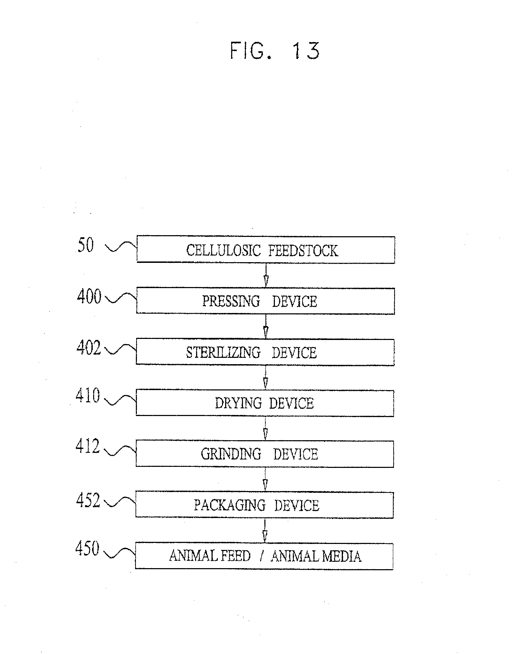

Reference is now made to Fig. 13, which is a simplified block diagram of a system for manufacturing animal feed from cellulosic feedstock, constructed and operative in accordance with an embodiment of the present invention. As seen in Fig. 13, the cellulosic feedstock 50 may be pressed in a pressing device 400 by any suitable means. Pressing device 400 may be formed of any one of the abovementioned apparati forming pressing device 108 of Fig. 4.

It is appreciated that pressing device 400 may be obviated.

The cellulosic feedstock 50 may be introduced into a sterilizing device 402 for sterilizing cellulosic feedstock 50 by any suitable means. Sterilizing device 402 may be formed of any one of the abovementioned apparati forming sterilizing device 40 of Fig. 1. Alternatively, the cellulosic feedstock 50 may be partially sterilized, such as by being introduced into a pasteurization device for pasteurizing the cellulosic feedstock 50.

It is appreciated that the sterilizing device 402 may be obviated.

The cellulosic feedstock 50 may be introduced into a drying device 410 for at least partial drying of cellulosic feedstock 50 by any suitable means. Drying device 410 may be formed of any one of the abovementioned apparati forming drying device 110 of Fig. 4.

It is appreciated that drying device 410 may be obviated.

The cellulosic feedstock 50 may be ground in a grinding device 412 by any suitable means. Grinding device 412 may be formed of any one of the abovementioned apparati forming grinding device 102 of Fig. 4. The cellulosic feedstock 50 maybe ground to any suitable particle size, such as to particles with a size of approximately less than 500 microns so as to form a powder therefrom.

It is appreciated that grinding device 412 may be obviated.

A resulting animal feed or animal media 450 may be thereafter packaged in a packaging device 452 by any suitable means, such as by employing vacuum packing or pellet packing in a pellet machine, for example. It is appreciated that packaging device 452 may be obviated.

It is appreciated that the order of using the devices described hereinabove may be alternated so as to produce animal feed or animal media 450 from cellulosic feedstock 50.

A skilled artisan will appreciate that in the process of producing animal feed or animal media 450 some of the devices described hereinabove may be obviated without compromising the quality of the produced animal feed or animal media 450. It is noted that the term "animal media" refers to a substance placed on the floor of animal pens.

The resulting animal feed or animal media 450 is obtained from the system described hereinabove. The animal feed or animal medium 450 is a composition substantially comprising an oil content of 1-10% thereof; a cellulose content of 50-90% thereof; a hemicellulose content of 2-20% thereof; a lignin content of less than 12% thereof; a nitrogen containing organic compound content of up to 15% thereof; a protein containing organic compound content of up to 15% thereof; a sand content of less than 5% thereof; a mineral content of less than 5% thereof and a dirt content of less than 5% thereof.

It is noted that the oil content may be an oil content of 1% thereof, an oil content of 1-2% thereof, an oil content of 1-3% thereof, an oil content of 1-4% thereof, an oil content 1-5% thereof, an oil content of 1-6% thereof, an oil content of 1-7% thereof, an oil content of 1-8% thereof, an oil content of 1-9% thereof or an oil content of 10% thereof.

The cellulose content may be a cellulose content of 50-55% thereof, a cellulose content of 55-60% thereof, a cellulose content of 60-65% thereof, a cellulose content of 65-70% thereof, a cellulose content of 70-75% thereof, a cellulose content of 75-80% thereof, a cellulose content of 80-85% thereof or a cellulose content of 85-90% thereof.

The hemicellulose content may be a hemicellulose content of 2% thereof, a hemicellulose content of 2-3% thereof, a hemicellulose content of 2-4% thereof, a hemicellulose content of 2-5% thereof a hemicellulose content of 2-6% thereof, a hemicellulose content of 2-7% thereof, a hemicellulose content of 2-8% thereof, a hemicellulose content of 2-9% thereof, a hemicellulose content of 2-10% thereof, a hemicellulose content of 2-11% thereof, a hemicellulose content of 2-12% thereof, a hemicellulose content of 2-13% thereof, a hemicellulose content of 2-14% thereof, a hemicellulose content of 2-15% thereof, a hemicellulose content of 2-16% thereof, a hemicellulose content of 2-17% thereof, a hemicellulose content of 2-18% thereof, a hemicellulose content of 2-19% thereof or a hemicellulose content of 20% thereof.

The lignin content may be a lignin content of less than 12% thereof, a lignin content of less than 11% thereof, a lignin content of less than 10% thereof, a lignin content of less than 9% thereof, a lignin content of less than 8% thereof, a lignin content of less than 7% thereof, a lignin content of less than 6% thereof ,a lignin content of less than 5% thereof, a lignin content of less than 4% thereof, a lignin content of less than 3% thereof, a lignin content of less than 2% thereof or a lignin content of less than 1% thereof.

The nitrogen containing organic compound content maybe a content of up to 1% thereof, a nitrogen containing organic compound content of up to 2% thereof, a nitrogen containing organic compound content of up to 3% thereof, a nitrogen containing organic compound content of up to 4% thereof, a nitrogen containing organic compound content of up to 5% thereof, a nitrogen containing organic compound content of up to 6% thereof, a nitrogen containing organic compound content of up to 7% thereof, a nitrogen containing organic compound content of up to 8% thereof, a nitrogen containing organic compound content of up to 9% thereof, a nitrogen containing organic compound content of up to 10% thereof, a nitrogen containing organic compound content of up to 11% thereof, a nitrogen containing organic compound content of up to 12% thereof, a nitrogen containing organic compound content of up to 13% thereof, a nitrogen containing organic compound content of up to 14% thereof or a nitrogen containing organic compound content of up to 15% thereof.

The protein containing organic compound content maybe a content of up to 1% thereof, a protein containing organic compound content of up to 2% thereof, a protein containing organic compound content of up to 3% thereof, a protein containing organic compound content of up to 4% thereof, a protein containing organic compound content of up to 5% thereof, a protein containing organic compound content of up to 6% thereof, a protein containing organic compound content of up to 7% thereof, a protein containing organic compound content of up to 8% thereof, a protein containing organic compound content of up to 9% thereof, a protein containing organic compound content of up to 10% thereof, a protein containing organic compound content of up to 11% thereof, a protein containing organic compound content of up to 12% thereof, a protein containing organic compound content of up to 13% thereof, a protein containing organic compound content of up to 14% thereof or a protein containing organic compound content of up to 15% thereof.

The sand content may be less than 5% thereof, less than 4% thereof, less than 3% thereof, less than 2% thereof, less than 1% thereof or less than 0.5% thereof. The mineral content may be less than 5% thereof, less than 4% thereof, less than 3% thereof, less than 2% thereof, less than 1% thereof or less than 0.5% thereof. The dirt content may be less than 5% thereof, less than 4% thereof, less than 3% thereof, less than 2% thereof, less than 1% thereof or less than 0.5% thereof.

The caloric value of the animal feed or animal media 450 may be in the range of 5000-16,000 BTU/Pound. It is noted that the caloric value of the animal feed or animal media 450 may be in the range of 5000-6000 BTU/Pound; in the range of 6000-7000 BTU/Pound; in the range of 7000-8000 BTU/Pound; in the range of 8000-9000 BTU/Pound; in the range of 9000-10000 BTU/Pound; in the range of 10000-11000 BTU/Pound; in the range of 11000-12000 BTU/Pound; in the range of 12000-13000 BTU/Pound; in the range of 13000-14000 BTU/Pound; in the range of 14000-15000 BTU/Pound or in the range of 15000-16000 BTU/Pound.

### EXAMPLE 9

### Experimental Procedure:

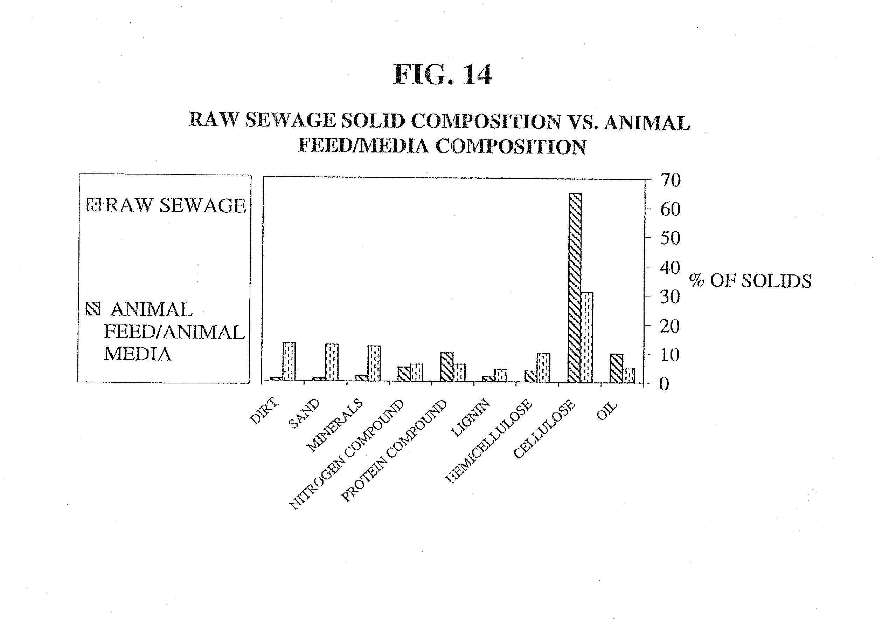

100 m³ of raw sewage, including a solid portion of approximately 0.1% of the raw sewage, was obtained from a municipal sewage waste system. As seen in Fig. 14, the composition of the raw sewage solid portion generally comprises 5% oil, 31% cellulose, 10% hemicellulose, 4.5% lignin, 6% protein containing organic compound, 6% nitrogen containing organic compound, 12.1 % minerals, 12.5% sand and 12.9% dirt.

The raw sewage was introduced into a hydrocyclone centrifuge at a pressure of 3 Atm for initial sand removal from the raw sewage.

Thereafter the raw sewage was introduced into an entrapping device formed of a net of a 250 micron mesh. Approximately 50Kg of solids were entrapped within the net. The residual liquid portion was discarded.

Secondary sand removal was performed by sedimentation in a conical-shaped pool wherein the sand sunk to the bottom of the pool. The sedimented sand was discarded.

Dirt removal was performed thereafter in a hydrocyclone centrifuge at a pressure of 3 Atm. The remaining portion was introduced into a magnet containing device wherein a portion of iron was magnetically removed.

The solid portion was introduced into a sterilizer at a temperature of 85°C for 10 minutes.

Mineral removal was performed by use of a chemical wash wherein the solid portion was boiled at 85°C for one hour with a solution of distilled water mixed with a 37% hydrochloric acid in a boiling apparatus. The boiled solid portion was thereafter washed 2 times with deionized water.

The solid portion was pressed in a screw press for partial removal of liquids therefrom.

The resultant cellulosic feedstock was thereafter pressed in a disk presser.

The cellulosic feedstock was sterilized in a sterilizer for one hour at a temperature of 100°C.

The resulting portion was partially dried in a drum dryer wherein 80% of the liquids were dried.

The partially dried portion was ground in a ball grinder.

The resultant animal feed or animal media was thereafter packed.

### Experimental Results:

As seen in Figure 14, a resulting animal feed or animal media composition was produced in the system described hereinabove wherein the animal feed or animal media composition generally comprises 10% oil, 65% cellulose, 4% hemicellulose, 2% lignin, 10% protein containing organic compound, 5% nitrogen containing organic compound, 2 % minerals, 1% sand and 1% dirt.

### EXAMPLE 10

### Experimental Procedure:

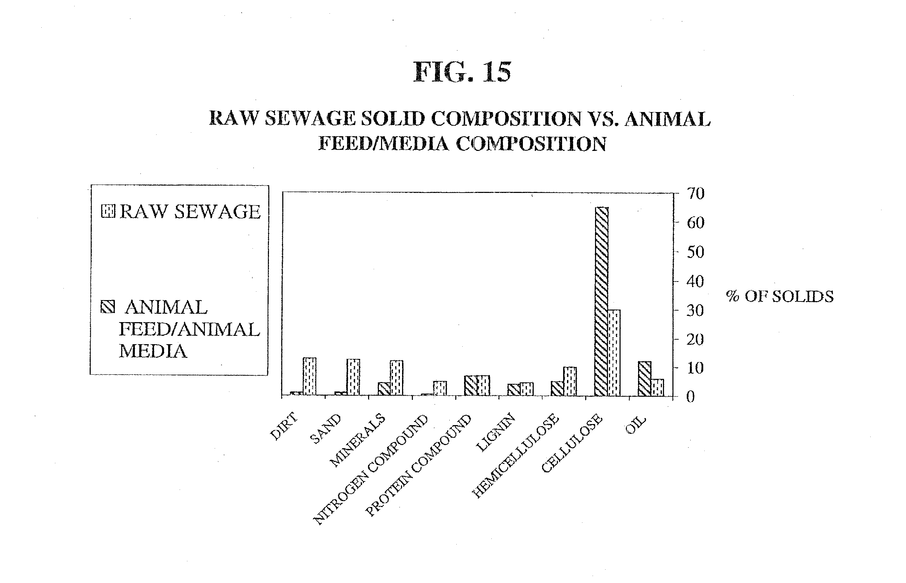

120 m³ of raw sewage, including a solid portion of approximately 0.05% of the raw sewage, was obtained from a municipal sewage waste system. As seen in Fig. 15, the composition of the raw sewage solid portion generally comprises 6% oil, 30% cellulose, 10% hemicellulose, 4.5% lignin, 7% protein containing organic compound, 5% nitrogen containing organic compound, 12.1 % minerals, 12.5% sand and 12.9% dirt.

The raw sewage was introduced into a hydrocyclone centrifuge at a pressure of 3 Atm for initial sand and dirt removal from the raw sewage.

Thereafter the raw sewage was introduced into a vibration separator commercially available from the Sewco company of 8029 US Highway 25
Florence, KY, USA under catalogue model SS of Sanitary Separators for entrapping solids therein by use of vibration. The residual liquid portion was discarded.

Secondary sand removal was performed by sedimentation in a conical-shaped pool wherein the sand sunk to the bottom of the pool. The sedimented sand was discarded.

The solid portion was pasteurized in a pasteurization device at a temperature of 72 °C for two minutes for partial sterilization thereof.

Mineral removal was performed by use of a chemical wash wherein the solid portion was washed with a solution of distilled water mixed with a 2% hydrochloric acid. The solid portion was thereafter washed with soft water.

The solid portion was pressed in a screw press for partial removal of liquids therefrom.

The resultant cellulosic feedstock was sterilized in a sterilizer for one hour at a temperature of 100°C.

The cellulosic feedstock was partially dried in a greenhouse for 7 days. The cellulosic feedstock was thereafter ground in a ball grinder to 300 microns.

The resultant animal feed or animal media was thereafter packed.

### Experimental Results:

As seen in Figure 15, a resulting animal feed or animal media composition was produced in the system described hereinabove wherein the animal feed or animal media composition generally comprises 12% oil, 65% cellulose, 5% hemicellulose, 4% lignin, 7% protein containing organic compound, 0.5% nitrogen containing organic compound, 4.5% minerals, 1% sand and 1% dirt. The caloric value of the resulting animal feed or animal media is approximately 8500 BTU/Pound.

It will be appreciated by persons skilled in the art that the present invention is not limited by what has been particularly shown and described herein above. Rather the scope of the present invention includes both combinations and subcombinations of the various features described hereinabove as well as variations and modifications which would occur to persons skilled in the art upon reading the specifications and which are not in the prior art.

## Claims

1. An ethanol containing composition comprising:
an oil content of 1-10% of said composition;
a cellulose content of 50-90% of said composition;
a hemicellulose content of 2-20% of said composition;
a lignin content of less than 12% of said composition;
a nitrogen containing organic compound content of less than 15% of said composition;
a protein containing organic compound content of less than 15% of said composition;
a mineral content of less than 5% of said composition;
a sand content of less than 5% of said composition; and
a dirt content of less than 5% of said composition.

2. The ethanol containing composition according to claim 1 wherein the composition is obtainable from a solid portion of a sewage suspension.

3. The ethanol containing composition according to any one of the preceding claims wherein a caloric value of said composition is in the range of 5000-16000 BTU/Pounds.

4. A method for producing an ethanol containing composition from a solid portion of a sewage suspension comprising:
trapping said solid portion from said sewage suspension;
removing sand from said solid portion;
removing a mineral from said solid portion; and
removing dirt from said solid portion,
thereby producing said ethanol containing composition.

5. The method according to claim 4 further comprising at least one of the following:
removing oil from said solid portion;
removing a protein containing organic compound from said solid portion;
removing a nitrogen containing organic compound from said solid portion;
hydrolyzing said solid portion;
grinding said solid portion;
at least partially sterilizing said solid portion; and
at least partially drying said solid portion.

6. The method according to claim 5
wherein said removing said protein containing organic compound from said solid portion is performed by pH Gradient Electrophoresis employing an acid wash, a hydrogen chloride wash, a dihydrogen phosphate wash or a sodium hydroxide wash or a combination thereof, or
wherein said removing said nitrogen containing organic compound from said solid portion is performed by pH Gradient Electrophoresis employing an acid wash, a hydrogen chloride wash, a dihydrogen phosphate wash or a sodium hydroxide wash or a combination thereof.

7. The ethanol containing composition according to claim 2 or 3 or the method for producing an ethanol containing composition according to any one of claims 4 to 6 wherein the sewage is raw sewage flowing within a sewerage waste system prior to standard wastewater treatment thereof.

8. The ethanol containing composition or the method for producing an ethanol containing composition according to claim 7 wherein the raw sewage is raw sewage from a municipal sewage waste system, wherein preferably the source of cellulose fibers is from fruits and vegetables, paper, cloths and laundry refuse, or raw sewage from industrial or agricultural waste systems.

9. A method for producing a cellulosic feedstock composition from a solid portion of a sewage suspension comprising:
trapping said solid portion from said sewage suspension;
removing sand from said solid portion;
removing a mineral from said solid portion; and
removing dirt from said solid portion,
thereby producing said cellulosic feedstock composition.

10. A combustion product composition comprising:
an oil content of 1-15% of said composition;
a cellulose content of 40-90% of said composition;
a hemicellulose content of 2-20% of said composition;
a lignin content of less than 12% of said composition;
a nitrogen containing organic compound content of less than 15% of said composition;
a protein containing organic compound content of less than 15% of said composition;
a mineral content of less than 5% of said composition;
a sand content of less than 5% of said composition; and
a dirt content of less than 5% of said composition.

11. A method for producing a combustion product composition from a solid portion of a sewage suspension comprising:
trapping said solid portion from said sewage suspension;
removing sand from said solid portion;
removing a mineral from said solid portion; and
removing dirt from said solid portion,
thereby producing said combustion product composition.

12. A pulp or paper product composition comprising:
an oil content of 1-10% of said composition;
a cellulose content of 50-90% of said composition;
a hemicellulose content of 2-20% of said composition;
a lignin content of less than 4% of said composition;
a nitrogen containing organic compound content of less than 15% of said composition;
a protein containing organic compound content of less than 15% of said composition;
a mineral content of less than 5% of said composition;
a sand content of less than 5% of said composition; and
a dirt content of less than 5% of said composition.

13. A method for producing a pulp or paper product composition from a solid portion of a sewage suspension comprising:
trapping said solid portion from said sewage suspension;
removing sand from said solid portion;
removing a mineral from said solid portion; and
removing dirt from said solid portion,
thereby producing said pulp or paper product composition.

14. An animal feed or animal media composition comprising:
an oil content of 1-10% of said composition;
a cellulose content of 50-90% of said composition;
a hemicellulose content of 2-20% of said composition;
a lignin content of less than 12% of said composition;
a nitrogen containing organic compound content of less than 15% of said composition;
a protein containing organic compound content of less than 15% of said composition;
a mineral content of less than 5% of said composition;
a sand content of less than 5% of said composition; and
a dirt content of less than 5% of said composition.

15. A method for producing an animal feed or animal media composition from a solid portion of a sewage suspension comprising:
trapping said solid portion from said sewage suspension;
removing sand from said solid portion;
removing a mineral from said solid portion; and
removing dirt from said solid portion,
thereby producing said animal feed or animal media composition.
